(19) Europäisches Patentamt
European Patent Office
Office européen des brevets

(11) **EP 4 447 191 B1**

(12) **EUROPEAN PATENT SPECIFICATION**

(45) Date of publication and mention
of the grant of the patent:
**25.03.2026 Bulletin 2026/13**

(51) International Patent Classification (IPC):
*H01M 10/42* (2006.01)    *H01M 10/48* (2006.01)
*H01M 10/637* (2014.01)

(21) Application number: **24154086.3**

(22) Date of filing: **26.01.2024**

(52) Cooperative Patent Classification (CPC):
**H01M 10/486; H01M 10/425; H01M 10/482;
H01M 10/637;** H01M 2010/4271; Y02E 60/10

(54) **BATTERY PACK AND METHOD OF CONTROLLING THE BATTERY PACK**

BATTERIEPACK UND VERFAHREN ZUR STEUERUNG DES BATTERIEPACKS

BLOC-BATTERIE ET PROCÉDÉ DE COMMANDE DU BLOC-BATTERIE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.03.2023 KR 20230037300**

(43) Date of publication of application:
**16.10.2024 Bulletin 2024/42**

(73) Proprietor: **Samsung SDI Co., Ltd.
Yongin-si, Gyeonggi-do 17084 (KR)**

(72) Inventor: **Moon, Soodeok
17084 Yongin-si, Gyeonggi-do (KR)**

(74) Representative: **Gulde & Partner
Patent- und Rechtsanwaltskanzlei mbB
Berliner Freiheit 2
10785 Berlin (DE)**

(56) References cited:
**EP-A1- 3 525 279        KR-A- 20230 021 501
US-A1- 2011 210 703**

**Description**

BACKGROUND

1. Field

Aspects of embodiments of the present disclosure relate to a battery pack and a method of controlling the battery pack.

2. Description of the Related Art

In general, secondary batteries are rechargeable, unlike non-rechargeable primary batteries. Secondary batteries are used as energy sources for devices such as mobile devices, electric vehicles, hybrid vehicles, electric bicycles, or uninterruptible power supplies. Depending on the type of an external device using a secondary battery, the secondary battery may be used as a single battery cell or as a battery pack in which a plurality of battery cells are connected to each other to constitute a unit.

Lithium-ion batteries have inherent risks of explosion and fire due to overcharge, overcurrent, and/or an internal short circuit. In order to detect such an abnormal state in advance, a cell temperature can be sensed by using a negative temperature coefficient (NTC) thermistor, etc. However, due to limitations in the number of sensing channels of an analog front-end (AFE) integrated circuit (IC) and an increase in the price thereof, not every cell temperature may be measured.

KR 2023 0021501 A relates to a battery pack and a method for controlling the battery pack, which can prevent erroneous detection of overheating and detect overheating without omission by using first and second temperature measuring elements having different resistance characteristics according to temperature change together. US 2011/210703 A1 discloses a thermal sensor device for monitoring a multi-cell battery which employs a plurality of PTC devices and an additional temperature sensor to provide safety and optimization features in a multi-cell battery system. EP 3 525 279 A1 relates to a battery pack including battery cells and temperature sensors configured to at least provide temperature measurements at different locations of the battery pack.

SUMMARY

Embodiments are directed to a battery pack that includes battery cells and first and second measurement circuits each configured to measure temperature information of the battery cells, and a battery management system configured to determine whether the battery cells are overheated based on the temperature information.

One or more embodiments include a battery pack using first- and second-type temperature measurement elements having different resistance characteristics according to temperature change and thus capable of preventing erroneous determination of overheating, and determining overheating accurately, and a method of controlling the battery pack.

Additional aspects will be set forth in part in the description which follows and, in part, will be apparent from the description, or may be learned by practice of the presented embodiments of the disclosure.

According to one or more embodiments, a battery pack includes a plurality of battery cells, a first measurement circuit unit and a second measurement circuit unit each configured to measure temperature information of the plurality of battery cells and respectively comprising a first-type temperature measurement element and a second-type temperature measurement element different from each other and having different characteristics of a resistance change according to a temperature change, wherein the first measurement circuit unit and the second measurement circuit unit are formed on a common base substrate or on different individual base substrates, and a battery management system configured to determine whether the battery cells are overheated based on the temperature information of the battery cells.

The first-type temperature measurement element may include a conformal coating that comprises silicone or epoxy, or a stiffener may be attached to one side of the common base substrate or the individual base substrate.

The first-type temperature measurement element and the second-type temperature measurement element may be arranged on the same line.

A plurality of first-type temperature measurement elements may be arranged in series to be respectively allocated to the plurality of battery cells in a direction in which the plurality of battery cells are arranged, a plurality of second-type temperature measurement elements may be arranged in the direction in which the plurality of battery cells are arranged, and the number of the second-type temperature measurement elements may be less than the number of the first-type temperature measurement elements.

The common base substrate or the individual base substrates may include a flexible insulating film or a rigid insulating substrate, and the plurality of first-type temperature measurement elements or the plurality of the second-type temperature measurement elements may be patterned on or mounted as chips on the common base substrate or the individual base substrates.

The first-type temperature measurement element may have a positive characteristic of the resistance change according to the temperature change, and may exhibit a nonlinear change in a profile of the resistance change according to the temperature change, and the second-type temperature measurement element may have a negative characteristic of the resistance change according to the temperature change, and may exhibit a linear change in a profile of the resistance change according to the temperature change.

The battery management system may be further configured to determine whether one or more of the plurality of battery cells are overheated based on a first voltage measurement value of a combined resistance of the first-type temperature measurement element that is measured by the first measurement circuit unit.

In an embodiment of the claimed invention, the battery management system is further configured to calculate a resistance prediction value by applying a temperature value of the second-type temperature measurement element that is measured based on a measurement value of the second measurement circuit unit to a resistance calculation formula derived based on a resistance profile according to a temperature of the first-type temperature measurement element, calculate a resistance measurement value based on a first voltage measurement value for a combined resistance of the first-type temperature measurement element that is measured by the first measurement circuit unit, and determine whether one or more of the plurality of battery cells are overheated based on the resistance prediction value and the resistance measurement value.

Additionally or alternatively, the battery management system is further configured to determine whether one or more of the plurality of battery cells are overheated by using a temperature resistance table calculated by applying a value of the combined resistance of the first-type temperature measurement element to a temperature calculation formula derived as an inverse function of the resistance calculation formula.

According to one or more embodiments, a method of controlling a battery pack including a plurality of battery cells comprises the steps of: measuring, by a first measurement circuit unit and a second measurement circuit unit, temperature information of the plurality of battery cells, the first measurement unit and the second measurement unit respectively including a first-type temperature measurement element and a second-type temperature measurement element different from each other and having different characteristics of a resistance change according to a temperature change, the first measurement circuit unit and the second measurement circuit unit being formed on a common base substrate or on different individual base substrates; and determining, by a battery management system, whether one or more of the plurality of battery cells are overheated based on the temperature information, wherein the battery management system determines whether one or more of the plurality of battery cells are overheated based on a first measurement value based on an output of the first measurement circuit unit, and a second measurement value based on an output of the second measurement circuit unit.

The first-type temperature measurement element may have a positive characteristic of the resistance change according to the temperature change, and may exhibit a nonlinear change at an inflection point in a profile of the resistance change according to the temperature change, and the second-type temperature measurement element may have a negative characteristic of the resistance change according to the temperature change, and may exhibit a linear change in a profile of the resistance change according to the temperature change.

The determining may further comprise determining whether the first measurement value is greater than or equal to a trigger point corresponding to the inflection point of the first-type temperature measurement element, and wherein the determining may be based on the first measurement value being greater than or equal to the trigger point and the second measurement value being greater than or equal to a threshold value.

The determining may be based on a first voltage measurement value of a combined resistance of the first-type temperature measurement element measured by the first measurement circuit unit.

In an embodiment of the claimed invention, the method further comprises calculating, by the battery management system, a resistance prediction value by applying a temperature value of the second-type temperature measurement element measured based on a measurement value of the second measurement circuit unit to a resistance calculation formula derived based on a resistance profile according to a temperature of the first-type temperature measurement element, and calculating, by the battery management system, a resistance measurement value based on a first voltage measurement value for a combined resistance of the first-type temperature measurement element that is measured by the first measurement circuit unit, wherein the determining may be based on the resistance prediction value and the resistance measurement value.

Additionally or alternatively, the determining further comprises using a temperature resistance table calculated by applying a value of the combined resistance of the first-type temperature measurement element to a temperature calculation formula derived as an inverse function of the resistance calculation formula.

According to one or more embodiments, a machine-readable medium storing executable instructions is provided; the instructions, on execution by a computing device, facilitate performance of operations including measuring, by a first measurement circuit unit and a second measurement circuit unit of a battery pack, temperature information of a plurality of battery cells of the battery pack, wherein the first measurement unit and the second measurement unit respectively comprise a first-type temperature measurement element and a second-type temperature measurement element different from each other and having different characteristics of a resistance change according to a temperature change, wherein the first measurement circuit unit and the second measurement circuit unit are formed on a common base substrate or on different individual base substrates; and determining, by a battery management system, whether one or more of the plurality of battery cells are overheated based on the temperature information, wherein the battery management system determines whether the one or more of the plurality of battery cells are overheated based on a first measurement value based on an output of the first measurement circuit unit and a second measurement value based on an output of the second measurement circuit unit.

According to an additional aspect of the machine-readable medium storing executable instructions, the first-type temperature measurement element may have a positive characteristic of the resistance change according to the temperature change and may exhibit a nonlinear change at an inflection point in a profile of the resistance change according to the temperature change, and the second-type temperature measurement element may have a negative characteristic of the resistance change according to the temperature change and may exhibit a linear change in a profile of the resistance change according to the temperature change.

According to another aspect of the machine-readable storage medium storing executable instructions, the determining may further include determining whether the first measurement value is greater than or equal to a trigger point corresponding to the inflection point of the first-type temperature measurement element, and wherein the determining may be based on the first measurement value being greater than or equal to the trigger point and the second measurement value being greater than or equal to a threshold value.

According to a another aspect of the machine-readable medium storing executable instructions, the operations may further include calculating, by the battery management system, a resistance prediction value by applying a temperature value of the second-type temperature measurement element measured based on a measurement value of the second measurement circuit unit to a resistance calculation formula derived based on a resistance profile according to a temperature of the first-type temperature measurement element; and calculating, by the battery management system, a resistance measurement value based on a first voltage measurement value for a combined resistance of the first-type temperature measurement element that is measured by the first measurement circuit unit, wherein the determining may be based on the resistance prediction value and the resistance measurement value.

According to a further aspect of the machine-readable medium storing executable instructions, the determining may further include using a temperature resistance table calculated by applying a value of the combined resistance of the first-type temperature measurement element to a temperature calculation formula derived from an inverse function of the resistance calculation formula.

Other aspects, features, and advantages than those described above will become clear from the following detailed description, claims, and drawings for carrying out the disclosure.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

BRIEF DESCRIPTION OF THE DRAWINGS

Features will become apparent to those of skill in the art by describing in detail exemplary embodiments with reference to the attached drawings in which:

FIG. 1 is an exploded perspective view of a battery pack according to an embodiment;
FIG. 2 is a perspective view of a battery cell illustrated in FIG. 1;
FIG. 3 is a diagram schematically illustrating an arrangement of a measurement circuit unit illustrated in FIG. 1;
FIGS. 4 and 5 are graphs illustrating characteristics of a resistance change according to a temperature change in a first-type temperature measurement element and a second-type temperature measurement element respectively, showing in FIG. 4 behaviors of a positive temperature coefficient (PTC) exhibiting a positive characteristic in resistance change according to temperature change, and showing in FIG. 5 a negative temperature coefficient (NTC) exhibiting a negative characteristic in resistance change according to temperature change, according to embodiments;
FIG. 6 is a diagram schematically illustrating a configuration of a measurement circuit unit according to an embodiment;
FIG. 7 is a diagram schematically illustrating a configuration of a measurement circuit unit according to another embodiment;
FIGS. 8A to 8D are diagrams schematically illustrating configurations of a measurement circuit unit according to different embodiments;

FIG. 9 is a diagram schematically illustrating a battery pack according to a modification of the embodiment of FIG. 3;

FIG. 10 is a diagram schematically illustrating a battery pack according to a modification of the embodiment of FIG. 1;

FIG. 11 is a diagram schematically illustrating a connection state of a first measurement circuit unit and a second measurement circuit unit, according to an embodiment;

FIG. 12 is a flowchart depicting a method of controlling a battery pack, according to an embodiment;

FIG. 13 is a diagram illustrating a schematic configuration of a battery management system according to an embodiment;

FIGS. 14 and 15 are diagrams relating to a method of determining whether a battery cell is overheated by using a voltage value for a combined resistance of a first-type temperature measurement element, according to an embodiment;

FIG. 16 is a diagram for describing a method of determining whether a battery cell is overheated by using a resistance profile according to the temperature of a first-type temperature measurement element, and a resistance calculation formula, according to an embodiment;

FIG. 17 is a flowchart depicting a method of controlling a battery pack, according to another embodiment;

FIGS. 18A and 18B are diagrams illustrating a schematic configuration for rigidity reinforcement, according to an embodiment; and

FIG. 19 is a diagram illustrating a schematic configuration of a first-type temperature measurement element and a second-type temperature measurement element, according to an embodiment.

## DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. Like reference numerals refer to like elements throughout.

As used herein, the term "and/or" includes any and all combinations of one or more of the associated listed items.

In the following embodiments, terms such as "first," "second," etc., are used only to distinguish one component from another, and such components must not be limited by these terms. In addition, a singular expression also includes the plural meaning as long as it is not inconsistent with the context. In addition, the terms "comprises," "includes," "has", and the like used herein specify the presence of stated features or components, but do not preclude the presence or addition of one or more other features or components.

For convenience of description, the magnitude of components in the drawings may be exaggerated or reduced. For example, each component in the drawings is illustrated to have an arbitrary size and thickness for ease of description, and thus the disclosure is not limited to the drawings.

In the following embodiments, when a region, component, unit, block, or module is referred to as being "on" another part, it may be directly or indirectly on the other part, that is, another intervening region, component, unit, block, or module may be present therebetween. In addition, when a region, component, unit, block, or module is referred to as being connected to another region, component, unit, block, or module, they may be directly connected to each other, or may be indirectly connected to each other with still another region, component, unit, block, or module therebetween.

Hereinafter, various embodiments will be described in detail with reference to the accompanying drawings such that those of skill in the art may easily practice the disclosure.

Referring to the drawings, a battery pack according to an embodiment may include a battery cell C, and a measurement circuit unit M configured to measure temperature information of the battery cell C and including first and second measurement circuit units M1 and M2 respectively including first- and second-type temperature measurement elements P and N having different characteristics of resistance change according to temperature change, wherein the first and second measurement circuit units M1 and M2 are formed on a common base substrate S.

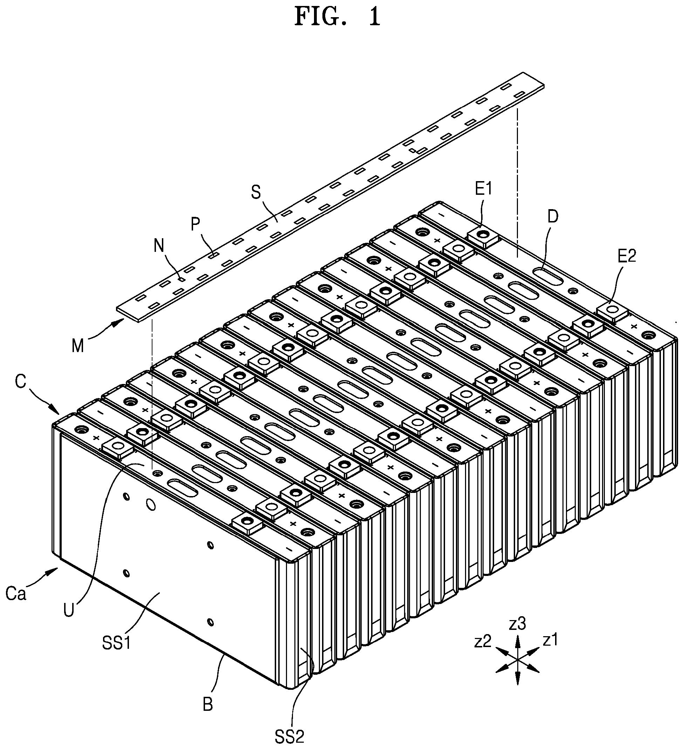

The battery pack according to an embodiment may include a plurality of battery cells C arranged in a first direction Z1, as shown for example in FIG. 1. The battery cell C may be provided in various shapes, such as an angular shape or a circular shape, and in an embodiment, the battery cell C may be provided as an angular battery cell including a case Ca formed in a substantially hexahedral shape. In various embodiments, the battery cell C may be provided as a circular battery cell including a substantially cylindrical case Ca.

The battery cell C may include an electrode assembly (not shown), the case Ca accommodating the electrode assembly (not shown), and electrodes E1 and E2 formed on the case Ca and electrically connected to the electrode assembly (not shown). For example, the electrodes E1 and E2 may include different first and second electrodes E1 and E2 arranged to be spaced apart from each other in a second direction Z2 intersecting with the first direction Z1. In an embodiment, depending on the type of the case Ca, the battery cell C may be provided as an angular battery cell C that includes a relatively rigid frame and has a hexahedral shape, or as a pouch battery cell C that includes the case Ca having a relatively flexible pouch shape, and the technical features to be described below may be applied to both the angular battery cell and the pouch battery cell in substantially the same manner.

In an embodiment, the battery cell C or the case Ca forming an exterior of the battery cell C may include an electrode surface U where the electrodes E1 and E2 are formed, a bottom surface B opposite to the electrode surface U, a wide side surface SS1 occupying a relatively large area and where the plurality of battery cells C arranged in the first direction Z1 face one another, and a narrow side surface SS2 occupying a relatively small area, wherein the wide side surface SS1 and the narrow side surface SS2 connect the electrode surface U and the bottom surface B to each other. For example, the electrode surface U and bottom surface B may face each other in a third direction Z3 intersecting with the first direction Z1 and second direction Z2.

The battery pack according to an embodiment may include the measurement circuit unit M configured to measure the temperature information of the battery cell C, and the measurement circuit unit M may extend in the first direction Z1 in which the battery cells C are arranged, and may extend along the electrode surface U or the narrow side surface SS2 of the battery cell C, or may extend generally in the first direction Z1 and include a branch between the wide side surfaces SS1 of neighboring battery cells C.

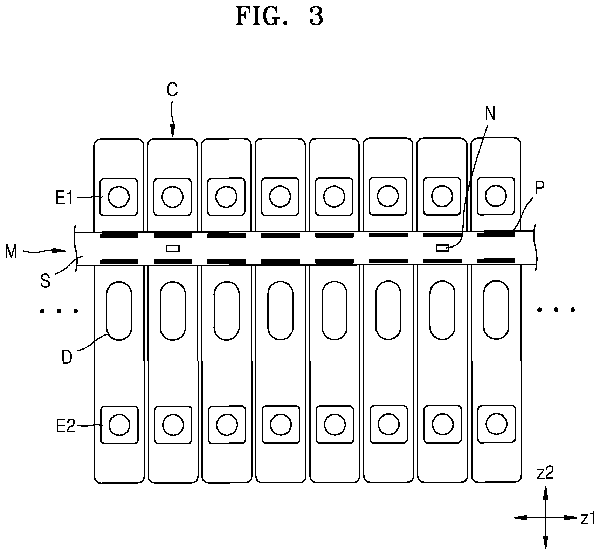

In an embodiment, the measurement circuit unit M may extend in the first direction Z1 in which the battery cells C are arranged, and may be arranged between the first electrode E1 and the second electrode E2 arranged at edge locations of opposite sides in the second direction Z2. For example, the measurement circuit unit M may be arranged, in the second direction Z2, between any one of the first electrode E1 and the second electrode E2, and a vent hole D formed at a center location between the first electrode E1 and the second electrode E2 (see FIG. 3). The measurement circuit unit M may be arranged between any one of the first electrode E1 and the second electrode E2 and the vent hole D, and thus, may not interfere with release of a high-temperature, high-pressure gas discharged through the vent hole D, and may avoid damage that may be caused by the release of the high-temperature, high-pressure gas.

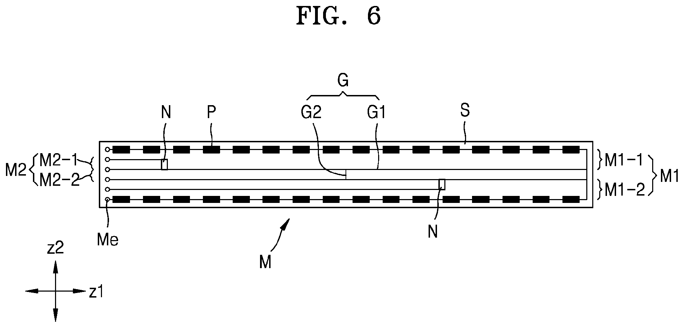

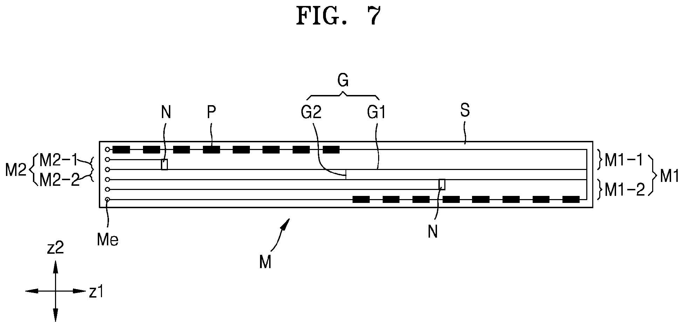

For measuring the temperature information of the battery cell C, the battery pack according to an embodiment may include the first measurement circuit unit M1 and the second measurement circuit unit M2 (as shown in FIGs. 6 and 7) respectively including the first-type temperature measurement element P and the second-type temperature measurement element N that have different characteristics of resistance change according to temperature change.

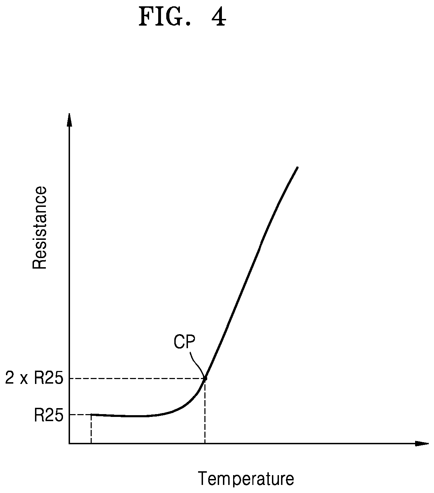

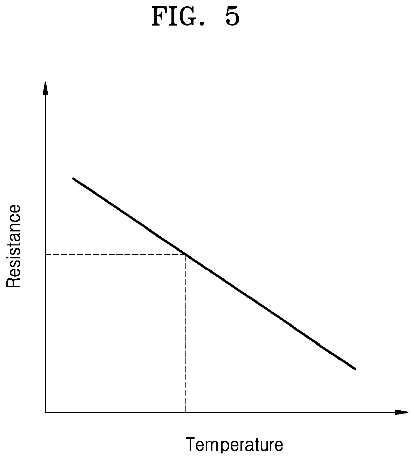

For example, the first-type temperature measurement element P may include a positive temperature coefficient (PTC) device that exhibits a positive characteristic for a change in electric resistance according to temperature change, and the second-type temperature measurement element N may include a negative temperature coefficient (NTC) device that exhibits a negative characteristic for a change in electric resistance according to temperature change. In more detail, FIGS. 4 and 5 respectively illustrate a profile showing the positive characteristic of the first-type temperature measurement element P, and a profile showing the negative characteristic of the second-type temperature measurement element N, respectively. For example, as shown in FIG. 4, the first-type temperature measurement element P may have a nonlinear behavior with almost no change in resistance in a relatively low temperature range according to a temperature change from room temperature (e.g., room temperature resistance: R25), but with a rapid change in resistance in a relatively high temperature range around an inflection point CP (e.g., twice the room temperature resistance: 2xR25). In more detail, the resistance may barely change according to a temperature change in the relatively low temperature range, but may rapidly change in a high temperature range that includes temperatures equal to or greater than a temperature (e.g., the inflection point CP) corresponding to a resistance twice the room temperature resistance (2xR25). For example, an abnormal temperature may be detected by detecting a threshold point (e.g., the inflection point CP) where a rapid resistance change of the first-type temperature measurement element P occurs according to an increase in the temperature, and an abnormal temperature or a sign of the abnormal temperature may be detected by detecting a preset threshold point.

In an embodiment, the battery cell C includes both the first-type temperature measurement element P, and the second-type temperature measurement element N having a different resistance characteristic from that of the first-type temperature measurement element P, and overheating is determined considering outputs of the first-type temperature measurement element P and the second-type temperature measurement element N together, and accordingly, compared with a comparative example of determining overheating based on only the output of the first-type temperature measurement element P, an abnormal temperature or overheating of the battery cell C may be precisely detected. As described above, due to a rapid resistance change in a high temperature range and the nonlinear behavior, it may be difficult for the first-type temperature measurement element P to accurately measure the temperature of the battery cell C.

Unlike the nonlinear behavior of the first-type temperature measurement element P, the second-type temperature measurement element N may exhibit an approximately linear change in resistance from a room temperature, and may exhibit an approximately linear change throughout a low temperature range and the high temperature range, instead of the nonlinear behavior that is different in the low temperature range and the high temperature range as in the first-type temperature measurement element P. Accordingly, the temperature of the battery cell C may be further accurately measured using the second-type temperature measurement element N, rather than using the first-type temperature measurement element P alone. In an embodiment, erroneous detection of overheating may be prevented, and overheating may be detected accurately, by introducing together the first-type temperature measurement element P and the second-type temperature measurement element N having different characteristics of resistance change according to temperature change.

The battery pack according to an embodiment may include a plurality of battery cells C arranged in one column in the first direction Z1, and may include the measurement circuit unit M for measuring state information from the plurality of battery cells C arranged in the column. Here, the measurement circuit unit M may include first measurement circuit unit M1 including at least two first-type temperature measurement elements P arranged at different measurement locations, and second measurement circuit unit M2 including at least two second-type temperature measurement elements N arranged at different measurement locations (as shown in FIGs. 6 and 7). The first measurement circuit unit M1 may include at least two first measurement circuit units each including a plurality of the first-type temperature measurement elements P.

In an embodiment, the first measurement circuit unit M1 may include a plurality of first-type temperature measurement elements P arranged to be allocated to the battery cells C, respectively, in the first direction Z1 in which the battery cells C are arranged. Here, each first-type temperature measurement element P may exhibit a change in resistance, while reacting to the temperature of each corresponding battery cell C to which the first-type temperature measurement element P is allocated. In an embodiment, the plurality of first-type temperature measurement elements P may be arranged in one column in the first direction Z1 at edge locations of the first measurement circuit unit M1, and may be arranged at measurement locations corresponding to the battery cells C, respectively.

In an embodiment, the first measurement circuit unit M1 may include two or more first measurement circuit units M1, and for example, may include a first measurement circuit unit M1-1 and a second measurement circuit unit M1-2. In an embodiment, a pair of first measurement circuit units M1 may be arranged at different measurement locations on left and right in the second direction Z2 to detect the temperature of the battery cell C at different measurement locations, and the first measurement circuit units M1 having substantially the same configuration as each other may be arranged at symmetric locations in the second direction Z2, and thus, redundancy may be provided such that, even when one first measurement circuit unit M1 is disconnected, temperature detection can be performed by the other first measurement circuit unit M1 without interruption. However, in various embodiments, there may be a single first measurement circuit unit M1, rather than the pair of first measurement circuit units M1 arranged at different measurement locations on left and right in the second direction Z2, and for example, the temperature of the battery cell C may be detected through a single first measurement circuit unit M1 arranged at a measurement location on left or right in the second direction Z2 or at a center measurement location in the second direction Z2.

In each first measurement circuit unit M1, the first-type temperature measurement elements P may be connected to each other in series between opposite ends of the first measurement circuit unit M1. That is, the first-type temperature measurement elements P may be connected to each other in series between opposite ends of the first measurement circuit unit M1 in the first direction Z1 in which the battery cells C are arranged, and an abnormal temperature or overheating of the battery cell C may be detected through a combined resistance obtained by summing up resistances of the first-type temperature measurement elements P that are connected to each other in series. As described above, the pair of first measurement circuit units M1 arranged at different measurement locations in the second direction Z2 to provide the redundancy may have substantially the same structure as each other, may each detect the combined resistance obtained by summing up the resistances of the plurality of first-type temperature measurement elements P connected to each other in series between opposite ends of the first measurement circuit unit M1, and may detect an individual combined resistance for each first measurement circuit unit M1.

In an embodiment, an abnormal temperature or overheating of the battery cell C may be detected considering all combined resistances of the different first measurement circuit units M1, for example, such as a maximum value or average value of different combined resistances of the different first measurement circuit units M1, or selectively considering any one of the combined resistances of the first measurement circuit units M1, and the combined resistances output from the different first measurement circuit units M1 may be used as inputs to determine whether a disconnection condition of the first measurement circuit unit M1 is satisfied, such that the abnormal temperature or overheating of the battery cell C may be detected by excluding the combined resistance of a disconnected first measurement circuit unit M1, and using the combined resistances of the remaining first measurement circuit unit M1.

Unlike the first measurement circuit unit M1, the second measurement circuit unit M2 may include at least two second measurement circuit units M2 each including a single second-type temperature measurement element N, and in an embodiment, the second measurement circuit unit M2 may include two second measurement circuit units M2 and, for example, may include a measurement circuit unit M2-1 and another measurement circuit unit M2-2. In an embodiment, different second measurement circuit units M2 (e.g., the measurement circuit units M2-1, M2-2) may include different second-type temperature measurement elements N that are arranged at different measurement locations in the first direction Z1 in which the battery cells C are arranged, for detecting the temperature of the battery cell C at different measurement locations.

In other words, in an embodiment, the second-type temperature measurement elements N may each form the second measurement circuit unit M2, and the different second-type temperature measurement elements N may be connected to both ends of the different second measurement circuit units M2 to be connected to a battery management system (BMS) to be described below, through different measurement channels. In an embodiment, an output of the second-type temperature measurement element N may be connected to different electrodes of the BMS through the different second measurement circuit units M2 that provide different measurement channels. In an embodiment, the second-type temperature measurement element N may be provided in the form of a chip, and the output of the second-type temperature measurement element N may be input to the BMS through a dedicated measurement channel or the second measurement circuit unit M2 (e.g., a wire of the second measurement circuit unit M2).

In an embodiment, a pair of second measurement circuit units M2 may be arranged at measurement locations between the pair of first measurement circuit units M1 arranged at the edge locations on opposite sides of the measurement circuit unit M in the second direction Z2. The second-type temperature measurement elements N respectively included in the pair of second measurement circuit units M2 may be arranged at different measurement locations in the first direction Z1, and at different measurement locations in the second direction Z2, to avoid physical interference between the second measurement circuit units M2 arranged adjacent to each other in the second direction Z2. In other words, the second-type temperature measurement elements N respectively included in the pair of second measurement circuit units M2 may be arranged at measurement locations that are spaced apart from each other in the first direction Z1 and the second direction Z2, and for example, may be arranged along diagonal locations following the first direction Z1 and the second direction Z2 together.

The different first measurement circuit units M1 (e.g., the measurement circuit units M1-1, M1-2) and the different second measurement circuit units M2 (e.g., the measurement circuit units M2-1, M2-2) may share a ground wire G, and the ground wire G may be arranged at a center location between the different second measurement circuit units M2 in the second direction Z2, and may include two or more conductive wires G1, and a connecting wire G2 between the different conductive wires G1. The ground wire G may provide one ends of the different first measurement circuit units M1 (e.g., M1-1, M1-2) and the different second measurement circuit units M2 (e.g., M2-1, M2-2).

In an embodiment, the different first measurement circuit units M1 (e.g., M1-1, M1-2) may be arranged at edge locations of the measurement circuit unit M in the second direction Z2, the ground wire G may be arranged at a center location between the different first measurement circuit units M1 (e.g., 1-1, M1-2), and the different second measurement circuit units M2 (e.g., M2-1, M2-2) may be arranged between the ground wire G and the first measurement circuit units M1 (e.g., M1-1, M1-2), respectively.

In an embodiment illustrated in FIG. 6, the different first measurement circuit units M1 (e.g., M1-1, M1-2) may include a plurality of first-type temperature measurement elements P arranged symmetrically with each other, and may detect an abnormal temperature or overheating of the battery cell C in balance back and forth in the first direction Z1 through the first-type temperature measurement elements P arranged in balance back and forth in the first direction Z1 in which the battery cells C are arranged. For example, in the embodiment of FIG. 6, the measurement circuit units M1-1, M1-2 may be expected to provide substantially equal outputs when ignoring a temperature deviation and a measurement error in the second direction Z2.

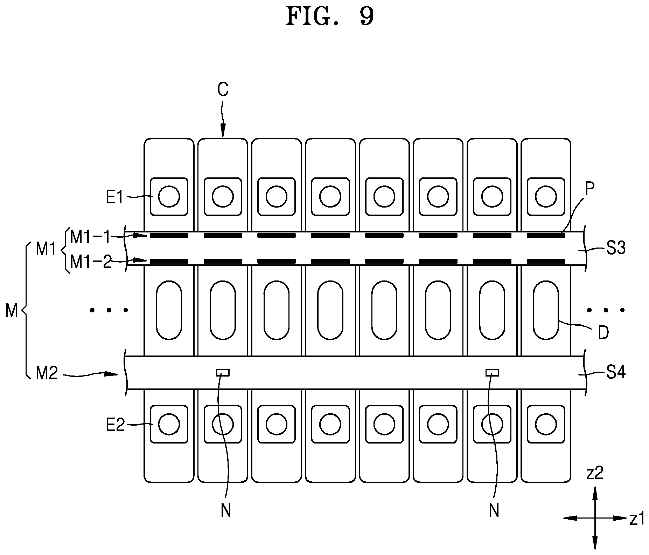

The first-type temperature measurement elements P may be arranged in the first direction Z1 at the edge locations in the second direction Z2 in which the different first measurement circuit units M1 face each other, and may sensitively react to temperatures inside the battery cells C through the first electrodes E1 and second electrodes E2 of the battery cells C at the edge locations in the second direction Z2 (see FIG. 9), and the first-type temperature measurement elements P may be symmetrically arranged at the edge locations on farthest opposite sides in the second direction Z2, to avoid physical interference or thermal interference between the different first-type temperature measurement elements P included in the different first measurement circuit units M1. Accordingly, the plurality of first-type temperature measurement elements P may be connected to each other along wires at the edge locations in the second direction Z2 at each first measurement circuit unit M1, and the first-type temperature measurement elements P may not be connected to a wire at an inner location in the second direction Z2.

FIG. 7 schematically illustrates the measurement circuit unit M according to another embodiment. The measurement circuit unit M illustrated in FIG. 7 may include different first measurement circuit units M1 (e.g., the measurement circuit unit M1-1 and the measurement circuit unit M1-2), and each of the first measurement circuit units M1 (e.g., the measurement circuit unit M1-1 and the measurement circuit unit M1-2) may include a plurality of the first-type temperature measurement elements P connected to each other in series between opposite ends.

In the embodiment illustrated in FIG. 7, the different first measurement circuit units M1 (e.g., M1-1, M1-2) may include a plurality of first-type temperature measurement elements P arranged asymmetrically with each other, and the measurement circuit unit M1-1 may include a plurality of first-type temperature measurement elements P that are biased forward in the first direction Z1 in which the battery cells C are arranged, whereas the measurement circuit unit M1-2 may include a plurality of first-type temperature measurement elements P that are biased backward in the first direction Z1. The plurality of first-type temperature measurement elements P thus can be arranged to have different measurement locations in the first direction Z1 in which the battery cells C are arranged, for example, such that the measurement circuit unit M1-1 includes a plurality of first-type temperature measurement elements P arranged at front measurement locations in the first direction Z1, while the measurement circuit unit M1-2 includes a plurality of first-type temperature measurement elements P arranged at rear measurement locations in the first direction Z1, accordingly, an abnormal temperature or overheating of the battery cells C arranged forward in the first direction Z1 may be sensitively detected through an output of the measurement circuit unit M1-1, and an abnormal temperature or overheating of the battery cells C arranged backward in the first direction Z1 may be sensitively detected through an output of the measurement circuit unit M1-2, and for example, an abnormal temperature or overheating of the battery cells C arranged in the first direction Z1 may be detected in balance back and forth, by combining the outputs of the measurement circuit units M1-1 and M1-2.

For example, in an embodiment, the number of first-type temperature measurement elements P included in the measurement circuit unit M1-1 may be designed to be equal to the number of first-type temperature measurement elements P included in the measurement circuit unit M1-2, and the total number of first-type temperature measurement elements P included in the first measurement circuit units M1 in the first direction Z1 in which the battery cells C are arranged may be halved such that the measurement circuit unit M1-1 may be formed by connecting half of the first-type temperature measurement elements P arranged at the front measurement locations in the first direction Z1, and the measurement circuit unit M1-2 may be formed by connecting the remaining half of the first-type temperature measurement elements P arranged at the rear measurement locations, to equally bisect the measurement load of the measurement circuit unit M1-1 and the measurement load of the measurement circuit unit M1-2.

In an embodiment, considering that the number of front measurement locations (or the number of front battery cells C) and the number of rear measurement locations (e.g., the number of rear battery cells C) that the measurement circuit unit M1-1 and the measurement circuit unit M1-2 are in charge of, respectively, are equal to each other, a deviation between the combined resistance of the measurement circuit unit M1-1 and the combined resistance of the measurement circuit unit M1-2 that is caused by a wire resistance may be easily removed or reduced by designing the wire resistance of the measurement circuit unit M1-1 and the wire resistance of the measurement circuit unit M1-2 in a balanced manner, and in this regard, in an embodiment, the entire wire length of the measurement circuit unit M1-1 and the entire wire length of the measurement circuit unit M1-2 may be designed to be equal to each other. For example, when a terminal Me formed at one end portion of the first measurement circuit unit M1 is connected to an electrode of the BMS at a forward location of the first measurement circuit unit M1 in the first direction Z1, the measurement circuit unit M1-1 in charge of the relatively front measurement location does not extend across the front measurement locations (e.g., the front first-type temperature measurement elements P) in the first direction Z1, but may include an extending portion extending in the first direction Z1 from the rear and thus be balanced with the measurement circuit unit M1-2 in the entire wire length.

In various embodiments, the number of first-type temperature measurement elements P included in the measurement circuit unit M1-1 may be designed to be different from the number of first-type temperature measurement elements P included in the measurement circuit unit M1-2, and the total number of first-type temperature measurement elements P included in the first measurement circuit units M1 in the first direction Z1 in which the battery cells C are arranged may be divided in a suitable ratio such that the measurement circuit unit M1-1 may be formed by connecting some of the first-type temperature measurement elements P arranged at the front measurement locations in the first direction Z1 to each other, and the measurement circuit unit M1-2 may be formed by connecting the remaining of the first-type temperature measurement elements P arranged at the rear measurement locations to each other.

For example, in various embodiments, considering characteristics of the first-type temperature measurement elements P, such as resolution or dispersion of the first-type temperature measurement elements P, the number of first-type temperature measurement elements P may be divided into an odd number of parts, such as thirds, instead of halves, to configure different first measurement circuit units M1.

In the embodiment illustrated in FIG. 7, the number of first-type temperature measurement elements P included in the measurement circuit unit M may be overall reduced by using the different first measurement circuit units M1 having an asymmetric arrangement of the first-type temperature measurement elements P, thus manufacturing costs of the measurement circuit unit M may be reduced, and, by halving the plurality of first-type temperature measurement elements P arranged in the first direction Z1, the different measurement circuit unit M1-1 and measurement circuit unit M1-2 may be are configured by forming the measurement circuit unit M1-1 by using half of the first-type temperature measurement elements P and forming the measurement circuit unit M1-2 by using the remaining half of the first-type temperature measurement elements P, and accordingly, even when one first measurement circuit unit M1 is disconnected, an abnormal temperature or overheating may be detected without stopping temperature measurement, by using the remaining first measurement circuit unit M1.

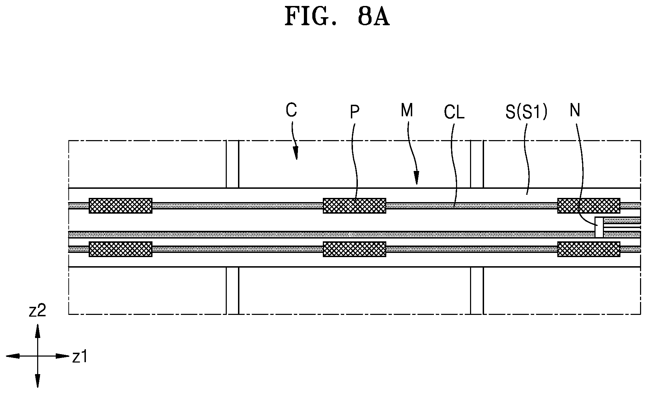

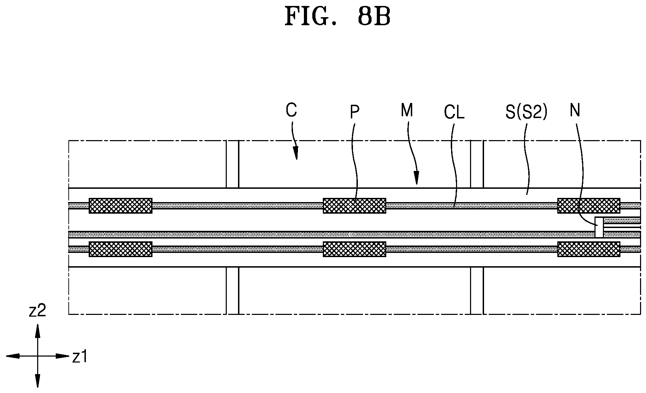

Referring to FIGS. 8A and 8B, the measurement circuit unit M may be packaged, by using the common base substrate S as a support base of the measurement circuit unit M, on a flexible circuit board including a flexible insulating film S1, or a rigid circuit board including a rigid insulating substrate S2, and the first measurement circuit unit M1 and second measurement circuit unit M2 may be modularized as one component in which they are not separated from each other. In more detail, the first measurement circuit unit M1 and the second measurement circuit unit M2 may be supported on the common base substrate S, and for example, the first measurement circuit unit M1 and the second measurement circuit unit M2 may be supported on the flexible insulating film S1 that is used as the common base substrate S, and thus, packaged on one flexible circuit board, and the first measurement circuit unit M1 and second measurement circuit unit M2 may be supported on the rigid insulating substrate S2 that is used as the common base substrate S, and thus packaged on one rigid circuit board. For reference, throughout the specification, the edge location or the center location of the measurement circuit unit M in the second direction Z2 intersecting with the first direction Z1 in which the battery cells C are arranged may correspond to an edge location or a center location of the common base substrate S forming a base of the measurement circuit unit M.

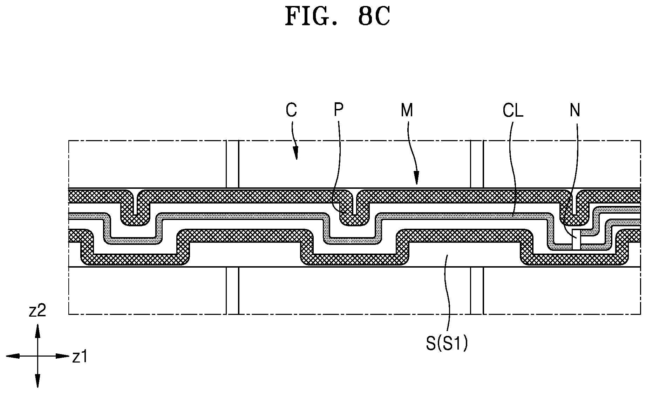

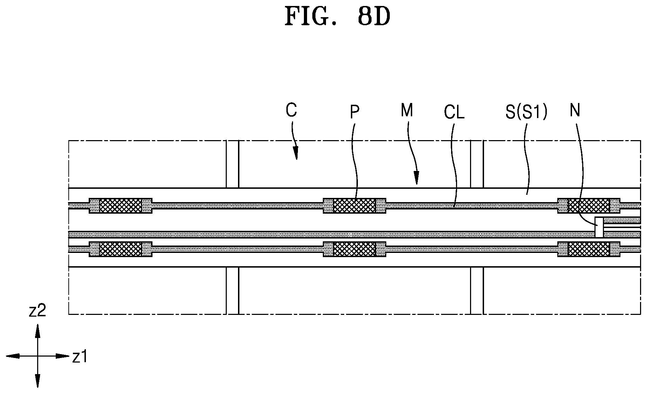

Referring to FIGS. 8A to 8D, in an embodiment, the first-type temperature measurement element P and the second-type temperature measurement element N may be implemented in various forms, and for example, the first-type temperature measurement element P may be patterned on the common base substrate S by using a print screen (see FIGS. 8A and 8B), or may be mounted on the common base substrate S in the form of a chip (see FIG. 8D). In addition, the second-type temperature measurement element N may be mounted on the common base substrate S in the form of a chip (see FIGS. 8A to 8D). Here, a conductive line CL may be patterned on the common base substrate S, and the first-type temperature measurement element P patterned by using the print screen may be arranged to be connected to the conductive line CL (see FIGS. 8A and 8B), or the second-type temperature measurement element N in the form of a chip may be mounted to be connected to the conductive line CL (see FIGS. 8A to 8D). Referring to FIGS. 8A and 8B, in some embodiments, the first measurement circuit unit M1 and second measurement circuit unit M2 may be supported by the flexible insulating film S1 used as the common base substrate S (see FIG. 8A), or may be supported by the rigid insulating substrate S2 used as the common base substrate S (see FIG. 8B), and the first-type temperature measurement element P may be patterned on the common base substrate S by using a print screen (see FIGS. 8A and 8B), or mounted in the form of a chip (see FIG. 8D), and the second-type temperature measurement element N may be mounted on the common base substrate S in the form of a chip. Meanwhile, referring to FIG. 8C, the first-type temperature measurement element P may be patterned by the conductive line CL on the common base substrate S, and for example, a bent portion may be formed in a partial section of the conductive line CL to increase the resistance, such that a change in the resistance according to a temperature change may be easily measured.

In an embodiment, the second-type temperature measurement element N may need to be provided in the form of a chip to configure a dedicated second measurement circuit unit M2 for providing a separate measurement channel, and accordingly, the number of second-type temperature measurement elements N may be less than the number of first-type temperature measurement elements P, due to spatial restriction and channel restriction of the BMS that receives a signal of the second-type temperature measurement element N through each corresponding measurement channel. However, in various embodiments, the number of first-type temperature measurement elements P and the number of second-type temperature measurement elements N may be designed to be equal to each other.

In various embodiments, the first-type temperature measurement element P and the second-type temperature measurement element N may have the same structure or different structures, and the first-type temperature measurement element P or the second-type temperature measurement element N may be patterned or mounted in the form of a chip on the common base substrate S, or on individual base substrates S3 and S4 (see FIG. 9). In an embodiment, the first-type temperature measurement element P or the second-type temperature measurement element N may be patterned by using a print screen or patterned by the conductive line CL including a bent portion.

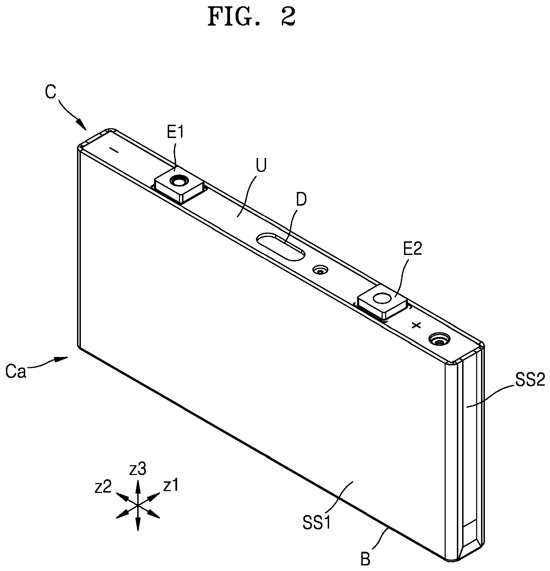

Referring to FIGS. 1 and 2, in an embodiment, the measurement circuit unit M including the first-type temperature measurement element P and the second-type temperature measurement element N may extend across the electrode surface U of the battery cell C in the first direction Z1, and in various embodiments, the measurement circuit unit M may extend across the wide side surface SS1, the narrow side surface SS2, or the bottom surface B, in addition to the electrode surface U of the battery cell C, and may be arranged to surround at least two of the electrode surface U, the wide side surface SS1, the narrow side surface SS2, or the bottom surface B of the battery cell C.

FIG. 9 is a diagram illustrating a battery pack according to a modification of the embodiment of FIG. 3. Referring to FIG. 9, the first measurement circuit unit M1 including the first-type temperature measurement element P, and the second measurement circuit unit M2 including the second-type temperature measurement element N may be formed on different separate base substrates S3 and S4, and for example, may be arranged on opposite sides of the vent holes D of the battery cells C.

In the embodiment illustrated in FIG. 9, the first measurement circuit unit M1 may include a pair of first measurement circuit units M1 (e.g., the measurement circuit unit M1-1 and the measurement circuit unit M1-2) arranged on opposite sides of the base substrate S3, but in various embodiments, the first measurement circuit unit M1 may include a single first measurement circuit unit M1 arranged at a center location of the base substrate S3, and even in this case, the first measurement circuit unit M1 and second measurement circuit unit M2 may be arranged on opposite sides of the battery cells C, respectively, with respect to the vent holes D of the battery cells C.

In the embodiment illustrated in FIG. 9, the first measurement circuit units M1 and the second measurement circuit units M2 are formed together on the electrode surfaces U of the battery cells C, but the first measurement circuit units M1 and the second measurement circuit units M2 may be arranged on different surfaces among the electrode surfaces U, the wide side surfaces SS1, the narrow side surfaces SS2, and the bottom surfaces B of the battery cells C, and at least some of the first measurement circuit units M1 and the second measurement circuit units M2 may be arranged on different surfaces to surround other neighboring surfaces.

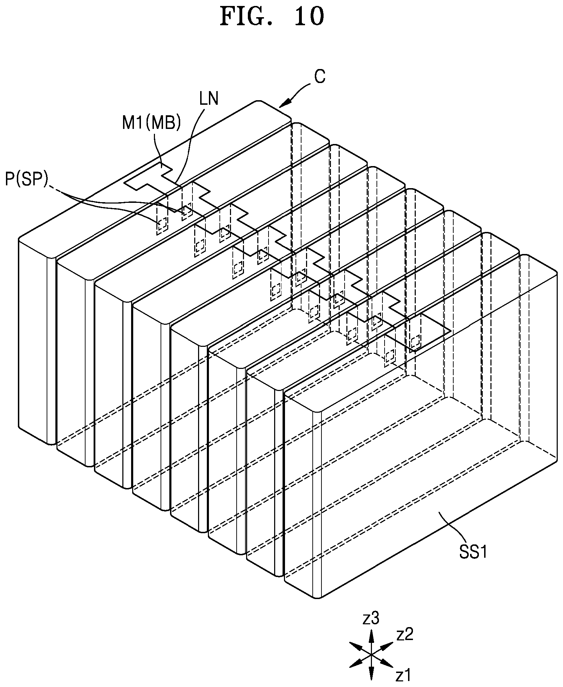

FIG. 10 is a diagram illustrating a battery pack according to a modification of the embodiment of FIG. 1. Referring to FIG. 10, the battery pack may include the first measurement circuit unit M1 including the first-type temperature measurement element P provided between the wide side surfaces SS1 of the neighboring battery cells C that face each other in the first direction Z1 in which the battery cells C are arranged. The first measurement circuit unit M1 may be formed by separating a measurement portion SP where the first-type temperature measurement element P (or a pair of first-type temperature measurement elements P) is arranged from a body portion MB of the first measurement circuit unit M1 through a cut line LN, and arranging the measurement portion SP separated from the body portion MB of the first measurement circuit unit M1 between the wide side surfaces SS1 of the neighboring battery cells C.

The battery pack illustrated in FIG. 10 may include the battery cell C having a flexible pouch shape, and in this case, the first measurement circuit unit M1 may be stably arranged between the wide side surfaces SS1 of the battery cells C, which occupy relatively large areas. In various embodiments, like the first measurement circuit unit M1, the second measurement circuit unit M2 may include the measurement portion SP separated from the body portion MB through the cut line LN, and may be formed by arranging the measurement portion SP between the neighboring battery cells C arranged in the first direction Z1.

Referring to FIGS. 1 and 2, in an embodiment, the measurement circuit unit M including the first-type temperature measurement element P and the second-type temperature measurement element N may extend across the electrode surface U of the battery cell C in the first direction Z1. In various embodiments, the measurement circuit unit M may extend across the wide side surface SS1, the narrow side surface SS2, or the bottom surface B, in addition to the electrode surface U of the battery cell C, and may be arranged to surround at least two of the electrode surface U, the wide side surface SS1, the narrow side surface SS2, or the bottom surface B of the battery cell C.

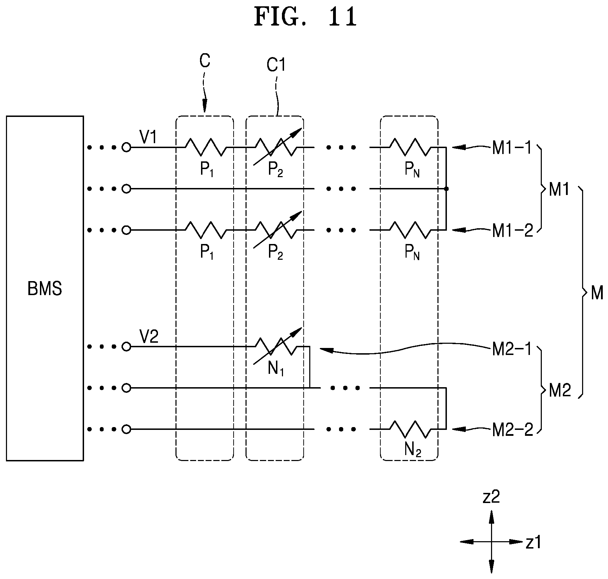

FIG. 11 is a schematic diagram illustrating a connection state of the first measurement circuit unit M1 and the second measurement circuit unit M2, according to an embodiment. Referring to FIG. 11, the battery pack according to an embodiment may further include a BMS connected to both ends of the first measurement circuit unit M1 and the second measurement circuit unit M2, and configured to determine an abnormal temperature or overheating of the battery cell C based on outputs of the first measurement circuit unit M1 and the second measurement circuit unit M2. The first measurement circuit unit M1 may include a pair of first measurement circuit units M1 (e.g., the measurement circuit unit M1-1 and the measurement circuit unit M1-2) that are connected to the BMS in parallel, and similarly, the second measurement circuit unit M2 may include a pair of second measurement circuit units M2 (e.g., the measurement circuit unit M2-1 and the measurement circuit unit M2-2) that are connected to the BMS in parallel. Here, each of the pair of first measurement circuit units M1 may include a plurality of first-type temperature measurement elements P (P1, P2, ..., PN) connected to each other in series in the first direction Z1 in which the battery cells C are arranged, and each of the pair of second measurement circuit units M2 may include a single second-type temperature measurement element N (N1 and N2). In an embodiment, an output of the first measurement circuit unit M1 may be used to calculate a first measurement value V1 including a resistance change that is increased due to overheating, through the first-type temperature measurement element P2 allocated to an overheated battery cell C1 from among the first-type temperature measurement elements P that are connected to each other in series. On the contrary, an output of the second measurement circuit unit M2 may be used to calculate a second measurement value V2 including a resistance change that is decreased due to the overheating, through the second-type temperature measurement element N1 corresponding to the overheated battery cell C1 according to measurement locations of the second-type temperature measurement elements N included in the second measurement circuit units M2, or to calculate the second measurement value V2 that does not include the resistance change due to overheating, through the second-type temperature measurement element N2 outside the overheated battery cell C1.

In an embodiment, overheating of the battery cell C is determined from a difference value (V1-V2) between the first measurement value V1 and the second measurement value V2 of the first measurement circuit unit M1 and the second measurement circuit unit M2, and here, by determining whether the battery cell C is overheated by using an absolute value of the difference value (V1-V2) between the first measurement value V1 and the second measurement value V2 of the first measurement circuit unit M1 and the second measurement circuit unit M2, it may be determined that the battery cell C is overheated, in cases in which:

i) the first measurement value V1 > the second measurement value V2, i.e., the difference value (V1-V2) between the first measurement value V1 and the second measurement value V2 is greater than a preset threshold value; or
ii) the second measurement value V2 > the first measurement value V1, i.e., a difference value (V2-V1) between the second measurement value V2 and the first measurement value V1 is greater than the preset threshold value.

The case in which i) the first measurement value V1 > the second measurement value V2, i.e., the difference value (V1-V2) between the first measurement value V1 and the second measurement value V2 is greater than the preset threshold value may correspond to:

a case in which the second-type temperature measurement element N is allocated to the overheated battery cell C1; or a case in which the battery cell C1 to which the second-type temperature measurement element N is allocated is overheated. Here, the first-type temperature measurement element P and the second-type temperature measurement element N may both detect the overheating of the battery cell C, and due to an increment of the resistance of the first-type temperature measurement element P and a decrement of the resistance of the second-type temperature measurement element N caused by the overheating of the battery cell C, the first measurement value V1 of the first measurement circuit unit M1 including the first-type temperature measurement element P and the second measurement value V2 of the second measurement circuit unit M2 including the second-type temperature measurement element N may satisfy a relationship of the first measurement value V1 > the second measurement value V2. In addition, when the difference value (V1-V2) between the first measurement value V1 and the second measurement value V2 is greater than or equal to the preset threshold value, it may be determined that the battery cell C is overheated.

In an embodiment, the first measurement value V1 detects the overheated battery cell C1 and the battery cell C that is not overheated together, whereas the second measurement value V2 mainly detects the overheated battery cell C1, thus, the decrement of the resistance of the second-type temperature measurement element N reflected in the second measurement value V2 is more noticeable than the increment of the resistance of the first-type temperature measurement element P reflected in the first measurement value V1, and accordingly, the difference value (V1-V2) between the first measurement value V1 and the second measurement value V2 is increased, and it may be determined that the battery cell C is overheated, when the difference value (V1-V2) is greater than equal to the preset threshold value.

In an embodiment, because the first measurement value V1 is indicated as the combined resistance of the first-type temperature measurement elements P of the first measurement circuit unit M1, which are connected to each other in series, the first measurement value V1 may be used as a first conversion measurement value whereas the second measurement value V2, in contrast to the first measurement value V1, may be converted into a second conversion measurement value considering the resistance of the second-type temperature measurement element N together with the number of first-type temperature measurement elements P (or the number of battery cells C), and then, a difference value between the first conversion measurement value and the second conversion measurement value may be compared with a threshold value.

The first conversion measurement value and the second conversion measurement value to be compared with the threshold value may be values obtained according to the total number of battery cells C, and here, the first conversion measurement value includes resistance values of both the overheated battery cell C1 (the resistance increased due to the overheating) and the battery cell C that is not overheated (e.g., no increase in resistance due to the overheating), but because, for example, the second conversion measurement value may correspond to a value obtained by multiplying the resistance value of the overheated battery cell C1 (the resistance decreased due to the overheating) by the number of battery cells C, the decrement of the second conversion measurement value is more noticeable than the increment of the first conversion measurement value, and thus, the difference value between the first conversion measurement value and the second conversion measurement value may be increased due to the overheating of the battery cell C. In an embodiment, an overheating signal of the battery cell C may therefore be amplified by using the first measurement value V1 and the second measurement value V2, or the first conversion measurement value and the second conversion measurement value, considering the total number of battery cells C, rather than outputs of the first-type temperature measurement element P and the second-type temperature measurement element N, and accordingly, overheating of the battery cell C may be detected accurately.

The case in which ii) the first measurement value V1 < the second measurement value V2, i.e., the difference value (V2-V1) between the second measurement value V2 and the first measurement value V1 is greater than the preset threshold value may correspond to:

a case in which the second-type temperature measurement element N is outside the measurement location of the overheated battery cell C1; or a case in which a battery cell other than the battery cell C to which the second-type temperature measurement element N is allocated is overheated. Here, the first measurement value V1 of the first-type temperature measurement element P, which detected the increment of the resistance of the overheated battery cell C1, and the second measurement value V2, which does not detect the decrement of the resistance of the overheated battery cell C1, may satisfy a relationship of the first measurement value V1 < the second measurement value V2. In addition, when the difference value (V2-V1) between the first measurement value V1 and the second measurement value V2 is greater than or equal to the preset threshold value, it may be determined that the battery cell C is overheated.

In an embodiment, even when the first measurement value V1 increases due to the overheated battery cell C1, the second measurement value V2 may not detect the overheating of the battery cell C, thus may have a relatively large resistance that is not decreased, and thus satisfy the relationship of the first measurement value V1 < the second measurement value V2. As described above, in an embodiment, the first conversion measurement value and the second conversion measurement value obtained by considering the total number of battery cells C included in the battery pack may be used considering a difference between the numbers of first-type temperature measurement elements P and second-type temperature measurement elements N, and the first measurement circuit unit M1 including the same number of first-type temperature measurement elements P as the total number of battery cells C may be used as the first conversion measurement value as it is, and for example, the second conversion measurement value may be obtained by multiplying the second measurement value V2 of the second measurement circuit unit M2 including the single second-type temperature measurement element N, by the number of battery cells C. Here, the first conversion measurement value includes resistance values of both the overheated battery cell C1 (the resistance increased due to the overheating) and the battery cell C that is not overheated (no increase in resistance due to the overheating), but for example, the second conversion measurement value may be represented by a value obtained by multiplying the resistance value of the battery cell C that is not overheated (no decrease in resistance due to the overheating) by the number of battery cells C, and thus, the second conversion measurement value without decrease due to the overheating of the battery cell C may be relatively noticeable than the first conversion measurement value in which the increment of the overheated battery cell C1 is reflected.

In an embodiment, in determining whether the battery cell C is overheated, determining whether the first measurement value is greater than or equal to a trigger point corresponding to the inflection point CP of the first-type temperature measurement element P may be performed before or after determining whether the battery cell C is overheated based on the difference value (V1-V2) between the first measurement value V1 and the second measurement value V2, or the difference value between the first conversion measurement value and the second conversion measurement value, to supplement the determination based on the difference value (V1-V2), and an error of determining that the battery cell C is overheated even when the battery cell C is not overheated may be prevented even in a case in which the first measurement value V1 < the second measurement value V2, i.e., the difference value (V2-V1) between the second measurement value V2 and the first measurement value V1 is greater than the preset threshold value.

In an embodiment, calculating temperature information based on the first measurement value V1 and the second measurement value V2, or the first conversion measurement value and the second conversion measurement value may be further included, and supplementary determination of overheating may be performed by using the temperature information, and for example, determining overheating by using the temperature information may be performed before or after determining overheating based on the difference value (V1-V2) between the first measurement value V1 and the second measurement value V2, or the difference value between the first conversion measurement value and the second conversion measurement value, to supplement the determination based on the difference value (V1-V2), and an error of determining that the battery cell C is overheated even when the battery cell C is not overheated may be prevented in a case in which the first measurement value V1 < the second measurement value V2, i.e., the difference value (V2-V1) between the second measurement value V2 and the first measurement value V1 is greater than the preset threshold value.

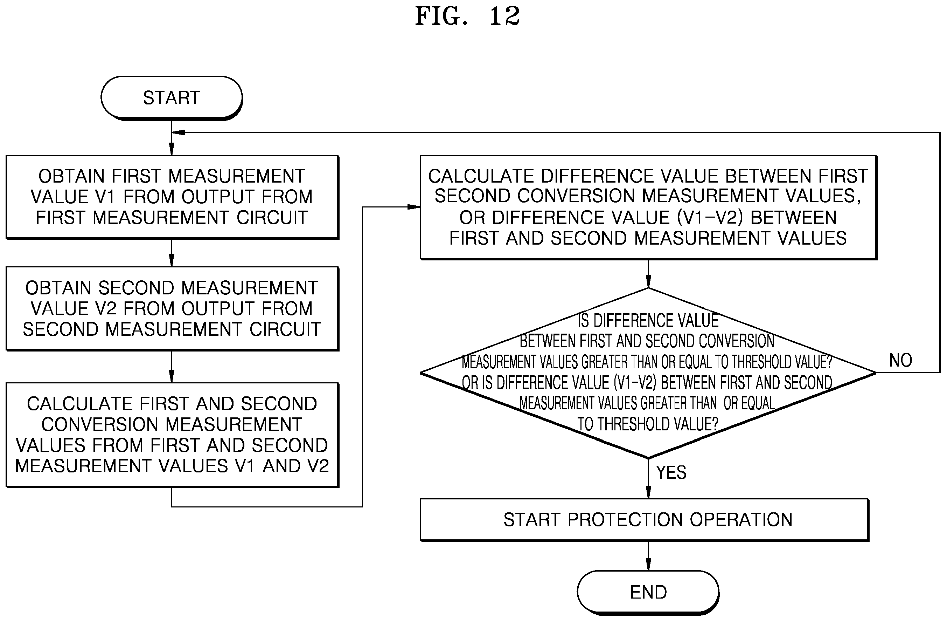

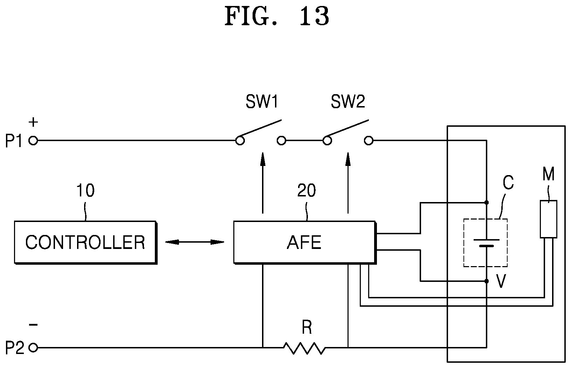

FIG. 12 is a flowchart of a method of controlling a battery pack, according to an embodiment. FIG. 13 is a diagram illustrating a schematic configuration of a BMS according to an embodiment.

Hereinafter, a method of controlling a battery pack according to another aspect of the disclosure will be described with reference to FIG. 12.

According to an embodiment, the method of controlling a battery pack including the battery cells C, and the first measurement circuit unit M1 and the second measurement circuit unit M2 configured to measure temperature information of the battery cells C and respectively including the first-type temperature measurement element P and the second-type temperature measurement element N having different characteristics of resistance change according to temperature change may determine whether the battery cell C is overheated by using a difference value (V1-V2) between the first measurement value V1 based on an output of the first measurement circuit unit M1 and the second measurement value V2 based on an output of the second measurement circuit unit M2.

In an embodiment, an abnormal temperature or overheating of the battery cell C may be precisely detected by using the first measurement circuit unit M1 and the second measurement circuit unit M2 respectively including the first-type temperature measurement element P and the second-type temperature measurement element N having different resistance characteristics.

According to an embodiment, in the first-type temperature measurement element P, a profile of the resistance change according to a temperature change may exhibit a nonlinear rapid change above the inflection point CP, and in the second-type temperature measurement element N, a profile of the resistance change according to a temperature change may exhibit a linear gradual change. In an embodiment, it is determined whether the first measurement value V1 is greater than or equal to the trigger point corresponding to the inflection point CP of the first-type temperature measurement element P, and when the first measurement value V1 is greater than or equal to the trigger point and the second measurement value V2 is greater than or equal to the threshold value, it may be determined that the battery cell C is overheated.

In an embodiment, the difference value (V1-V2) calculated from the first measurement value V1 from the first measurement circuit unit M1 including the first-type temperature measurement element P and the second measurement value V2 from the second measurement circuit unit M2 is compared with the threshold value, and an abnormal temperature or overheating of the battery cell C may be determined based on a result of the comparing. Hereinafter, determination of overheating of the battery cell C according to the comparison of the difference value (V1-V2) between the first measurement value V1 and the second measurement value V2 with the threshold value will be described in more detail.

The method of controlling a battery pack according to an embodiment may be performed under control of a BMS or a controller 10 (see FIG. 13) configured to control the overall operation of the BMS. A schematic configuration of the BMS will be described in more detail below with reference to FIG. 13.

In an embodiment, the first measurement value V1 may be obtained from an output of the first measurement circuit unit M1, and may correspond to the resistance of the first measurement circuit unit M1 or the resistance of the first-type temperature measurement element P included in the first measurement circuit unit M1, or may correspond to a voltage drop of the first measurement circuit unit M1. Similarly, the second measurement value V2 may be obtained from an output of the second measurement circuit unit M2, and may correspond to the resistance of the second measurement circuit unit M2 or the resistance of the second-type temperature measurement element N included in the second measurement circuit unit M2, or may correspond to a voltage drop of the second measurement circuit unit M2.

The controller 10 of FIG. 13 may calculate the first measurement value V1 from the output of the first measurement circuit unit M1, and similarly, may calculate the second measurement value V2 from the output of the second measurement circuit unit M2. In addition, the controller 10 of FIG. 13 may calculate a first conversion measurement value from the first measurement value V1, and similarly, may calculate a second conversion measurement value from the second measurement value V2.

Depending on a configuration of the measurement circuit unit M according to an embodiment, the controller 10 of FIG. 13 may calculate the first and second measurement values V1 and V2 and the first and second conversion measurement values in different manners. In the configuration of the measurement circuit unit M illustrated in FIG. 6, the controller 10 of FIG. 13 may calculate, as the first measurement value V1, the combined resistance obtained by summing up resistances of the plurality of first-type temperature measurement elements P connected to each other in series between opposite ends of the first measurement circuit unit M1, and may calculate, as the second measurement value V2, the resistance of the second-type temperature measurement element N connected between opposite ends of the second measurement circuit unit M2. Here, the controller 10 of FIG. 13 may perform a subsequent calculation by using the first measurement value V1 as the first conversion measurement value, and may calculate the second conversion measurement value through a separate conversion of the second measurement value V2. In more detail, the first conversion measurement value corresponds to the combined resistance obtained by summing up the resistances of the plurality of first-type temperature measurement elements P connected to each other in series between opposite ends of the first measurement circuit unit M1, and thus, the second conversion measurement value may also be calculated as the combined resistance obtained by summing up resistances of the same number of second-type temperature measurement elements N as the number of first-type temperature measurement elements P. In more detail, the controller 10 of FIG. 13 may calculate the second conversion measurement value by multiplying the resistance (e.g., a representative value to be described below) of the single second-type temperature measurement element N connected between opposite ends of the second measurement circuit unit M2, by the number of first-type temperature measurement elements P.

In an embodiment, two or more second measurement circuit units M2 may be provided, different second measurement values V2 may be obtained based on outputs of different second-type temperature measurement elements N included in the different second measurement circuit units M2, and one second measurement value V2 selected from among the different second measurement values V2, for example, the second measurement value V2 having the highest value, may be used as the representative value, and the second conversion measurement value may be calculated by multiplying the representative value by the number of first-type temperature measurement elements P. In various embodiments, the controller 10 of FIG. 13 may use an average value of the different second measurement values V2 as the representative value, and calculate the second conversion measurement by multiplying the representative value by the number of first-type temperature measurement elements P.

In an embodiment, the number of first-type temperature measurement elements P connected to each other between opposite ends of the first measurement circuit unit M1 may be equal to the total number of battery cells C arranged in the first direction Z1, and for example, the first-type temperature measurement elements P may be allocated to the battery cells C arranged in the first direction Z1, respectively. In such a configuration, the controller 10 of FIG. 13 may also obtain the second conversion measurement value by multiplying the representative value obtained from the resistances of the second-type temperature measurement elements N by the number of battery cells C, instead of the number of first-type temperature measurement elements P. In an embodiment, the first measurement circuit unit M1 may include a pair of first measurement circuit units M1 each including the same number of first-type temperature measurement elements P as the number of the battery cells C, to provide redundancy in preparation for disconnection, and in this case, the number of first-type temperature measurement elements P may refer to the number of battery cells C or the number of first-type temperature measurement elements P included in each first measurement circuit unit M1, the number of first-type temperature measurement elements P included in the pair of first measurement circuit units M1 may refer to a multiple of the number of battery cells C, and the number of first-type temperature measurement elements P included in the pair of first measurement circuit units M1 may not be considered in calculating the second conversion measurement value.

In the configuration of measurement circuit unit M illustrated in FIG. 7, the controller 10 of FIG. 13 may calculate, as the first measurement value V1, a total combined resistance obtained by summing up the combined resistance obtained by summing up the resistances of the plurality of first-type temperature measurement elements P connected to each other in series between opposite ends of the first measurement circuit unit M1 (e.g., the measurement circuit unit M1-1), and the combined resistance obtained by summing up the resistances of the plurality of first-type temperature measurement elements P connected to each other in series between opposite ends of another first measurement circuit unit M1 (e.g., the measurement circuit unit M1-2). In addition, the controller 10 of FIG. 13 may calculate, as the second measurement value V2, the resistance of the second-type temperature measurement element N connected between the opposite ends of the second measurement circuit unit M2. Here, the controller 10 of FIG. 13 may perform a subsequent calculation by using the first measurement value V1 as the first conversion measurement value, and may calculate the second conversion measurement value through a separate conversion of the second measurement value V2. In more detail, the first conversion measurement value corresponds to the total combined resistance obtained by summing up the combined resistance obtained by summing up the resistances of the plurality of first-type temperature measurement elements P connected to each other in series between opposite ends of the first measurement circuit unit M1, and the combined resistance obtained by summing up the resistances of the plurality of first-type temperature measurement elements P connected to each other in series between opposite ends of the other first measurement circuit unit M1, and thus, the second conversion measurement value may also be calculated as a combined resistance obtained by summing up resistances of the same number of second-type temperature measurement elements N as the number of first-type temperature measurement elements P. In more detail, the controller 10 of FIG. 13 may calculate the second conversion measurement value by multiplying the resistance (e.g., a representative value to be described below) of the single second-type temperature measurement element N connected between opposite ends of the second measurement circuit unit M2, by the number of first-type temperature measurement elements P.

Regarding the number of first-type temperature measurement elements P for calculating the second conversion measurement value, the first measurement circuit unit M1 may include a pair of different first measurement circuit units M1 to provide redundancy in preparation for disconnection, and each first measurement circuit unit M1 may include the measurement circuit unit M1-1 including a plurality of first-type temperature measurement elements P allocated to the front battery cells C in the first direction Z1, and the measurement circuit unit M1-2 including a plurality of first-type temperature measurement elements P allocated to the rear battery cells C in the first direction Z1, and the number of first-type temperature measurement elements P may correspond to a number obtained by adding the number of first-type temperature measurement elements P included in the measurement circuit unit M1-1 and the number of first-type temperature measurement elements P included in the measurement circuit unit M1-2. In an embodiment, the same number of first-type temperature measurement elements P as the number of battery cells C arranged in the first direction Z1 may be provided, and one first-type temperature measurement elements P may be allocated to each of the battery cells C arranged in the first direction Z1. For example, the number of battery cells C arranged in the first direction Z1 may be halved such that the first-type temperature measurement elements P of the measurement circuit unit M1-1 may be allocated to the front half of the battery cells C, and the first-type temperature measurement elements P of the measurement circuit unit M1-2 may be allocated to the rear half of the battery cells C. Here, the total number of first-type temperature measurement elements P may be equal to the number of battery cells C, and may correspond to the total number of first-type temperature measurement elements P included in the measurement circuit unit M1-1 and the measurement circuit unit M1-2.

Regarding the representative value of the second-type temperature measurement elements N for calculating the second conversion measurement value, two or more second measurement circuit units M2 may be provided, and one second measurement value V2 selected from among different second measurement values V2, for example, such as the second measurement value V2 having the highest value, may be used as the representative value to calculate the second conversion measurement value by multiplying the representative value by the number of first-type temperature measurement elements P. In various embodiments, the controller 10 of FIG. 13 may use an average value of the different second measurement values V2 as the representative value to calculate the second conversion measurement value.

As will be described below, in an embodiment, an abnormal temperature or overheating of the battery cell C may be detected based on the difference value between the first conversion measurement value and the second conversion measurement value. In various embodiments, the number of first-type temperature measurement elements P and the number of second-type temperature measurement elements N may be equal to each other, and the first-type temperature measurement elements P connected between opposite ends of the first measurement circuit unit M1 and the second-type temperature measurement elements N connected between opposite ends of the second measurement circuit unit M2 may be connected in various manners, such as in series or in parallel, and thus, in various embodiments, the difference value between the first conversion measurement value and the second conversion measurement value may be comprehensively represented by the difference value (V1-V2) between the first measurement value V1 and the second measurement value V2, and throughout the specification, the difference value between the first conversion measurement value and the second conversion measurement value means that the numbers of first-type temperature measurement element P and second-type temperature measurement element N are equal to each other, and more broadly, may be represented by the difference value (V1-V2) between the first measurement value V1 and the second measurement value V2. Hereinafter, to prevent confusion before and after conversion, the expression 'the difference value between the first conversion measurement value and the second conversion measurement value will be used instead of the expression 'the difference value (V1-V2) between the first measurement value V1 and the second measurement value V2', but more broadly, the difference value between the first conversion measurement value and the second conversion measurement value may be comprehensively represented by the difference value (V1-V2) between the first measurement value V1 and the second measurement value V2. For reference, in an embodiment, the difference value between the first conversion measurement value and the second conversion measurement value or the difference value (V1-V2) between the first measurement value V1 and the second measurement value V2 may consider only the difference in quantity quantitatively and may be consider the sign (+ or -), and in this regard, the difference value may be represented by the absolute value of the difference value between the first conversion measurement value and the second conversion measurement value, and the controller 10 of FIG. 13 may define the difference value as data having only a quantity without a sign or convert the difference value into an absolute value through a function, and then compare the difference value with a threshold value in quantity as described below.

Referring to FIG. 11, in an embodiment, overheating of the battery cell C is determined from a difference value (V1-V2) between the first measurement value V1 and the second measurement value V2 of the first measurement circuit unit M1 and the second measurement circuit unit M2, and here, by determining whether the battery cell C is overheated by using an absolute value of the difference value (V1-V2) between the first measurement value V1 and the second measurement value V2 of the first measurement circuit unit M1 and the second measurement circuit unit M2, it may be determined that the battery cell C is overheated, in cases in which:

i) the first measurement value V1 > the second measurement value V2, i.e., the difference value (V1-V2) between the first measurement value V1 and the second measurement value V2 is greater than a preset threshold value; or

ii) the second measurement value V2 > the first measurement value V1, i.e., a difference value (V2-V1) between the second measurement value V2 and the first measurement value V1 is greater than the preset threshold value.

The case in which i) the first measurement value V1 > the second measurement value V2, i.e., the difference value (V1-V2) between the first measurement value V1 and the second measurement value V2 is greater than the preset threshold value may correspond to:

a case in which the second-type temperature measurement element N is allocated to the overheated battery cell C1; or a case in which the battery cell C1 to which the second-type temperature measurement element N is allocated is overheated. Here, the first-type temperature measurement element P and the second-type temperature measurement element N may both detect the overheating of the battery cell C, and due to an increment of the resistance of the first-type temperature measurement element P and a decrement of the resistance of the second-type temperature measurement element N caused by the overheating of the battery cell C, the first measurement value V1 of the first measurement circuit unit M1 including the first-type temperature measurement element P and the second measurement value V2 of the second measurement circuit unit M2 including the second-type temperature measurement element N may satisfy a relationship of the first measurement value V1 > the second measurement value V2. In addition, when the difference value (V1-V2) between the first measurement value V1 and the second measurement value V2 is greater than or equal to the preset threshold value, it may be determined that the battery cell C is overheated.

In an embodiment, the first measurement value V1 detects the overheated battery cell C1 and the battery cell C that is not overheated together, whereas the second measurement value V2 mainly detects the overheated battery cell C1, thus, the decrement of the resistance of the second-type temperature measurement element N reflected in the second measurement value V2 is more noticeable than the increment of the resistance of the first-type temperature measurement element P reflected in the first measurement value V1, and accordingly, the difference value (V1-V2) between the first measurement value V1 and the second measurement value V2 is increased, and it may be determined that the battery cell C is overheated, when the difference value (V1-V2) is greater than equal to the preset threshold value.

In an embodiment, because the first measurement value V1 is indicated as the combined resistance of the first-type temperature measurement elements P of the first measurement circuit unit M1, which are connected to each other in series, the first measurement value V1 may be used as a first conversion measurement value whereas the second measurement value V2, in contrast to the first measurement value V1, may be converted into a second conversion measurement value considering the resistance of the second-type temperature measurement element N together with the number of first-type temperature measurement elements P (or the number of battery cells C), and then, a difference value between the first conversion measurement value and the second conversion measurement value may be compared with a threshold value.

The first conversion measurement value and the second conversion measurement value to be compared with the threshold value may be values obtained according to the total number of battery cells C, and here, the first conversion measurement value includes resistance values of both the overheated battery cell C1 (the resistance increased due to the overheating) and the battery cell C that is not overheated (e.g., no increase in resistance due to the overheating), but because, for example, the second conversion measurement value may correspond to a value obtained by multiplying the resistance value of the overheated battery cell C1 (the resistance decreased due to the overheating) by the number of battery cells C, the decrement of the second conversion measurement value is more noticeable than the increment of the first conversion measurement value, and thus, the difference value between the first conversion measurement value and the second conversion measurement value may be increased due to the overheating of the battery cell C. In an embodiment, an overheating signal of the battery cell C may be amplified by using the first measurement value V1 and the second measurement value V2, or the first conversion measurement value and the second conversion measurement value, considering the total number of battery cells C, rather than outputs of the first-type temperature measurement element P and the second-type temperature measurement element N, and accordingly, overheating of the battery cell C may be detected accurately.

The case in which ii) first measurement value V1 < the second measurement value V2, i.e., the difference value (V2-V1) between the second measurement value V2 and the first measurement value V1 is greater than the preset threshold value may correspond to:

a case in which the second-type temperature measurement element N is outside the measurement location of the overheated battery cell C1; or a case in which a battery cell C other than the battery cell C to which the second-type temperature measurement element N is allocated is overheated. Here, the first measurement value V1 of the first-type temperature measurement element P, which detected the increment of the resistance of the overheated battery cell C1, and the second measurement value V2, which does not detect the decrement of the resistance of the overheated battery cell C1, may satisfy a relationship of the first measurement value V1 < the second measurement value V2. In addition, when the difference value (V2-V1) between the first measurement value V1 and the second measurement value V2 is greater than or equal to the preset threshold value, it may be determined that the battery cell C is overheated.

In an embodiment, even when the first measurement value V1 increases due to the overheated battery cell C1, the second measurement value V2 may not detect the overheating of the battery cell C, thus may have a relatively large resistance that is not decreased, and thus satisfy the relationship of the first measurement value V1 < the second measurement value V2. As described above, in an embodiment, the first conversion measurement value and the second conversion measurement value obtained by considering the total number of battery cells C included in the battery pack may be used considering a difference between the numbers of first-type temperature measurement elements P and second-type temperature measurement elements N, and the first measurement circuit unit M1 including the same number of first-type temperature measurement elements P as the total number of battery cells C may be used as the first conversion measurement value as it is, and for example, the second conversion measurement value may be obtained by multiplying the second measurement value V2 of the second measurement circuit unit M2 including the single second-type temperature measurement element N, by the number of battery cells C. Here, the first conversion measurement value includes resistance values of both the overheated battery cell C1 (the resistance increased due to the overheating) and the battery cell C that is not overheated (no increase in resistance due to the overheating), but for example, the second conversion measurement value may be represented by a value obtained by multiplying the resistance value of the battery cell C that is not overheated (no decrease in resistance due to the overheating) by the number of battery cells C, and thus, the second conversion measurement value without decrease due to the overheating of the battery cell C may be relatively noticeable than the first conversion measurement value in which the increment of the overheated battery cell C1 is reflected.

In an embodiment, in determining whether the battery cell C is overheated, determining whether the first measurement value is greater than or equal to a trigger point corresponding to the inflection point CP of the first-type temperature measurement element P may be performed before or after determining whether the battery cell C is overheated based on the difference value (V1-V2) between the first measurement value V1 and the second measurement value V2, or the difference value between the first conversion measurement value and the second conversion measurement value, to supplement the determination based on the difference value (V1-V2), and for example, an error of determining that the battery cell C is overheated even when the battery cell C is not overheated may be prevented even in a case in which the first measurement value V1 < the second measurement value V2, i.e., the difference value (V2-V1) between the second measurement value V2 and the first measurement value V1 is greater than the preset threshold value.

In an embodiment, calculating temperature information based on the first measurement value V1 and the second measurement value V2, or the first conversion measurement value and the second conversion measurement value may be further included, and supplementary determination of overheating may be performed by using the temperature information, and for example, determining overheating by using the temperature information may be performed before or after determining overheating based on the difference value (V1-V2) between the first measurement value V1 and the second measurement value V2, or the difference value between the first conversion measurement value and the second conversion measurement value, to supplement the determination based on the difference value (V1-V2), and an error of determining that the battery cell C is overheated even when the battery cell C is not overheated may be prevented in a case in which the first measurement value V1 < the second measurement value V2, i.e., the difference value (V2-V1) between the second measurement value V2 and the first measurement value V1 is greater than the preset threshold value.

In an embodiment, the threshold value may be set as follows. The threshold value is a value to be compared with the difference value (V1-V2) between the first measurement value V1 and the second measurement value V2, or with the difference value between the first conversion measurement value and the second conversion measurement value, and for example, may be determined as a difference value between first temperature data calculated from the resistances of one group of first-type temperature measurement elements P represented by the first conversion measurement value, and the second temperature data calculated from the resistances of one group of second-type temperature measurement elements N represented by the second conversion measurement value.

The group of first-type temperature measurement elements P may refer to the number of first-type temperature measurement elements P corresponding to a calculation basis of the first conversion measurement value, and in an embodiment, may refer to the plurality of first-type temperature measurement elements P included in the first measurement circuit unit M1. The group of second-type temperature measurement elements N may refer to the number of second-type temperature measurement elements N corresponding to a calculation basis of the second conversion measurement value, and in an embodiment, may refer to the same number of second-type temperature measurement elements N as the number of first-type temperature measurement elements P included in the first measurement circuit unit M1.

The first temperature data is temperature data calculated from the resistance of the group of first-type temperature measurement elements P, and is a quantitative parameter collectively defining the temperatures of the plurality of battery cells C configuring the battery pack, rather than the temperature of an individual battery cell C calculated from an individual first-type temperature measurement element P, and may refer to temperature data calculated collectively from the resistances of the group of first-type temperature measurement elements P, rather than a qualitative temperature.

Similarly, the second temperature data is temperature data calculated from the resistance of the group of second-type temperature measurement elements N, and is a quantitative parameter collectively defining the temperatures of the plurality of battery cells C configuring the battery pack, rather than the temperature of an individual battery cell C calculated from an individual second-type temperature measurement element N, and may refer to temperature data calculated collectively from the resistances of the group of second-type temperature measurement elements N, rather than a qualitative temperature.

For example, in an embodiment, the first temperature data and the second temperature data do not refer to qualitative temperature information of an individual battery cell C, but collectively define temperature information of a plurality of battery cells C, and may be parameters that include the temperature information of the plurality of battery cells C, but are at different levels from the temperature information. For example, the first temperature data and the second temperature data may be understood as temperature information output from behaviors of the first-type temperature measurement element P and the second-type temperature measurement element N illustrated in FIGS. 4 and 5 by using, as inputs, a collective resistance of one group of first-type temperature measurement elements P and second-type temperature measurement elements N, and here, because the first temperature data and the second temperature data are obtained by using, as inputs, the collective resistance of the group of first-type temperature measurement elements P and second-type temperature measurement elements N, instead of resistances of an individual first-type temperature measurement element P and second-type temperature measurement element N, the first temperature data and the second temperature data output by using, as inputs, the collective resistance of the group of first-type temperature measurement elements P and second-type temperature measurement elements N may be different from a temperature of an individual battery cell C.

In an embodiment, the first temperature data and the second temperature data may be defined values obtained by, based on the behaviors of the first-type temperature measurement element P and the second-type temperature measurement element N referring to FIGS. 4 and 5, outputting resistances of the first-type temperature measurement element P and the second-type temperature measurement element N by using a reference temperature for determining overheating as an input, and adding the output resistances of the first-type temperature measurement element P and the second-type temperature measurement element N to the numbers of first-type temperature measurement elements P and second-type temperature measurement elements N that are included in the group and are the basis of the first conversion measurement value and the second conversion measurement value, and a difference between the first temperature data and the second temperature data may be preset as the threshold value.

In an embodiment, the first temperature data and the second temperature data may be in units of resistance, or may be in units of temperatures output from a resistance based on the behaviors of the first-type temperature measurement element P and the second-type temperature measurement element N illustrated in FIGS. 4 and 5 respectively. For example, in an embodiment, when the threshold value is in units of temperatures, the first conversion measurement value and the second conversion measurement value to be compared with the threshold value may also be in units of temperatures, and for example, the first conversion measurement value and the second conversion measurement value may respectively correspond to values obtained by outputting temperatures of the first-type temperature measurement element P and the second-type temperature measurement element N illustrated in FIGS. 4 and 5, by using the resistance of a group of first-type temperature measurement elements P and a resistance of a group of second-type temperature measurement element N as inputs.

In an embodiment, an abnormal temperature or overheating of the battery cell C may be determined based on the threshold value by detecting a case in which a temperature difference between a first temperature based on the resistance of the first-type temperature measurement element P and a second temperature based on the resistance of the second-type temperature measurement element N is between 10°C to 15 °C (e.g., the difference between the first temperature and the second temperature is a temperature set between 10 °C to 15 °C). That is, the first temperature data and the second temperature data may be calculated from the resistances of the first-type temperature measurement element P and the second-type temperature measurement element N at a time point when the temperature difference between the first temperature based on the resistance of the first-type temperature measurement element P and the second temperature based on the resistance of the second-type temperature measurement element N is a temperature between 10 °C and 15 °C, and a difference value between the calculated first temperature data and second temperature data may be determined as the threshold value.

Referring to FIGS. 4 and 5, a difference value between the first conversion measurement value based on the first-type temperature measurement element P whose resistance change according to temperature change exhibits a positive characteristic, and the second conversion measurement value based on the second-type temperature measurement element N whose resistance change according to temperature change exhibits a negative characteristic, increases according to an increase in temperature, and thus, when the difference value increases to a certain level, it may be determined that the battery cell C has an abnormal temperature or is overheated. Here, regarding the threshold value for determining an abnormal temperature or overheating of the battery cell C, the first temperature data and the second temperature data may be calculated from the resistances of a group of first-type temperature measurement elements P and a group of second-type temperature measurement elements N at a time point when the temperature difference between the first temperature based on the resistance of the first-type temperature measurement element P and the second temperature based on the resistance of the second-type temperature measurement element N is a temperature between 10 °C and 15 °C, and the difference value between the calculated first temperature data and second temperature data may be set as the threshold value.

Another aspect of setting the threshold value is as follows. Referring to FIGS. 4 and 5, a resistance characteristic of the first-type temperature measurement element P rapidly increases according to a temperature change in a high temperature range, and thus, an error may occur in temperature measurement, and such an error in temperature measurement may gradually increase according to an increase in temperature. To compensate for such a resistance characteristic of the first-type temperature measurement element P, the second-type temperature measurement element N is applied in parallel together with the first-type temperature measurement element P, the first temperature data and the second temperature data may be calculated from the resistances of the group of first-type temperature measurement elements P and the group of second-type temperature measurement elements N at a time point when the temperature difference between the first temperature based on the resistance of the first-type temperature measurement element P and the second temperature based on the resistance of the second-type temperature measurement element N is a temperature between 10 °C and 15 °C, and the difference value between the calculated first temperature data and second temperature data may be set as the threshold value.

In an embodiment, it is determined that a threshold condition is satisfied when the temperature difference between the first temperature and the second temperature corresponds to a temperature between 10°C and 15 °C, for example, it may be determined that the threshold condition is satisfied when the temperature difference between the first temperature and the second temperature is 10 °C from among 10 °C to 15 °C, and in an embodiment, a case in which the temperature difference between the first temperature and the second temperature is 10° C may be set as the threshold condition or the threshold value for early detection of an abnormal temperature or overheating of the battery cell C. However, in various embodiments, a case in which the temperature difference between the first temperature and the second temperature is, for example, 15 °C may be determined as the threshold condition or the threshold value considering an increase in temperature in a situation such as high-speed charging of the battery cell C.

In an embodiment, the measurement circuit unit M may be electrically connected to a BMS. For example, the terminal Me of FIGS. 6 and 7 provided at one end of the measurement circuit unit M may be connected to a connector (not shown) of the BMS. Referring to FIG. 13, the BMS may include the controller 10 configured to control the overall operation of the BMS, and an analog front-end (AFE) 20 connected to the measurement circuit unit M and configured to receive an output of the measurement circuit unit M, convert an output regarding temperature information received from the measurement circuit unit M into a quantized digital value, transmit the quantized digital value to the controller 10, and output an on/off control signal for a charging switch SW2 and a discharging switch SW1 according to a control signal of the controller 10. The BMS may receive information about a temperature and a voltage through the measurement circuit unit M and a voltage measurement terminal V that are arranged at a location adjacent to the battery cell C. In addition, a current sensor R is provided on charge and discharge paths of the battery cell C to measure charge and discharge currents of the battery cell C.

In an embodiment, as described above, the controller 10 may calculate the difference value (V1-V2) between the first measurement value V1 and the second measurement value V2 based on outputs of the first measurement circuit unit M1 and the second measurement circuit unit M2, compare the calculated difference value (V1-V2) with the preset threshold value, and detect an abnormal temperature or overheating of the battery cell C based on a result of the comparing. Based on detecting that the battery cell C is overheated, the controller 10 may start a protection operation for stopping charging and discharging operations of the battery cell C by outputting an off signal for the charging switch SW2 and/or the discharging switch SW1, and accordingly, an accident, such as an explosion or ignition, caused by the overheating of the battery cell C may be prevented.

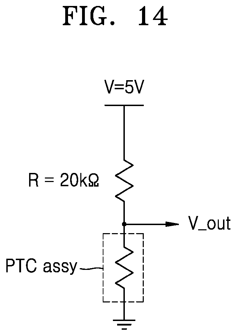

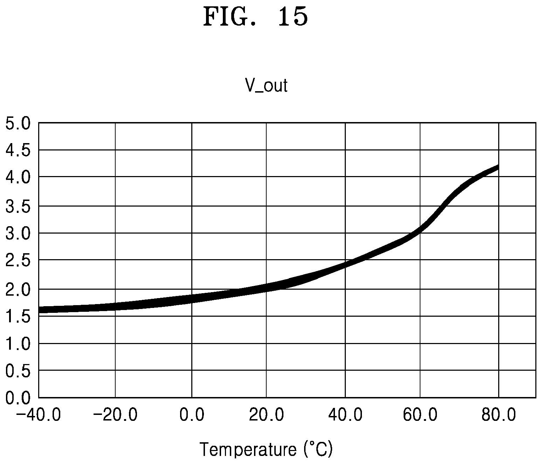

FIGS. 14 and 15 are diagrams relating to a method of determining whether a battery cell is overheated by using a voltage value for a combined resistance of a first-type temperature measurement element, according to an embodiment.

FIG. 14 schematically illustrates a measurement circuit for measuring a voltage value V_out for a combined resistance PTC assy of the first-type temperature measurement element P, according to an embodiment. For example, a measurement circuit for measuring the voltage value V_out of the combined resistance PTC assy of the first-type temperature measurement element P may be included in the first measurement circuit unit M1.

The BMS according to an embodiment may determine whether a battery cell is overheated based on a first voltage measurement value for the combined resistance PTC assy of the first-type temperature measurement element P, which is measured by the first measurement circuit unit M1.

For example, referring to FIG. 14, 5V is the VCC of the measurement circuit, and a pull-up resistor of 20 kohm can be set equal to the value of the combined resistance PTC assy of the first-type temperature measurement element P in order to satisfy the median value of 2.5 V in the voltage division rule.

For example, referring to FIG. 15, the BMS according to an embodiment may determine whether a battery cell is overheated based on the first voltage measurement value for the combined resistance PTC assy of the first-type temperature measurement element P by using a temperature voltage profile of the first-type temperature measurement element P. For example, the BMS may calculate a temperature value based on the first voltage measurement value for the combined resistance PTC assy of the first-type temperature measurement element P, and determine whether the battery cell is overheated, by comparing the calculated temperature value of the first-type temperature measurement element P with a temperature value of the second-type temperature measurement element N. That is, by using the temperature value of the second-type temperature measurement element N as a reference temperature, when the temperature value of the first-type temperature measurement element P is greater than or equal to the temperature value of the second-type temperature measurement element N, the BMS may determine that the battery cell is overheated. In addition, when overheating of the battery cell is detected, the BMS may take measures such as setting off an alarm or starting an operation of a protection circuit.

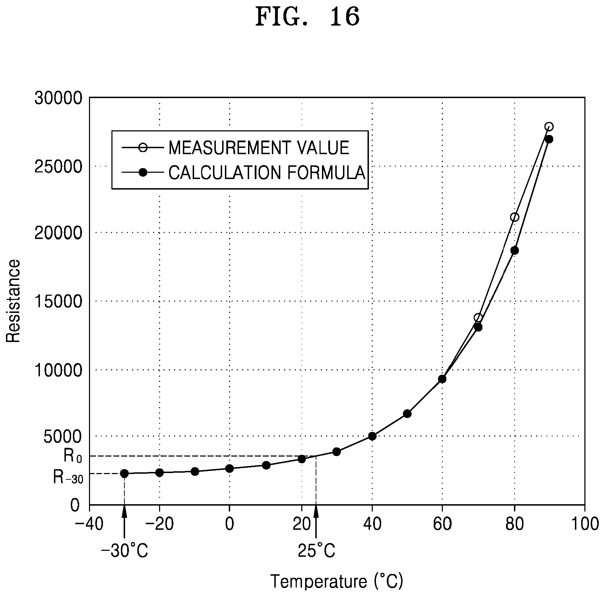

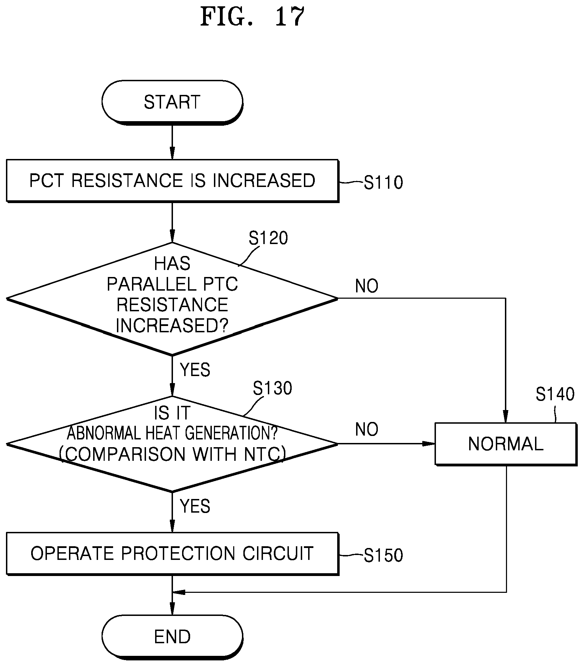

FIG. 16 is a diagram for describing a method of determining whether a battery cell is overheated by using a resistance profile according to the temperature of the first-type temperature measurement element P, and a resistance calculation formula, according to an embodiment. In addition, FIG. 17 is a flowchart depicting a method of controlling a battery pack, according to another embodiment.

The BMS according to an embodiment may calculate a resistance prediction value by applying the temperature value of the second-type temperature measurement element N measured based on a measurement value of the second measurement circuit unit M2, to the resistance calculation formula of Equation 1 below derived based on the resistance profile of the first-type temperature measurement element P according to temperature.

In addition, the BMS according to an embodiment may calculate a resistance measurement value based on a first voltage measurement value for the combined resistance of the first-type temperature measurement element P measured by the first measurement circuit unit M1.

In addition, the BMS according to an embodiment may determine whether a battery cell is overheated based on the resistance prediction value and the resistance measurement value.

For example, in the graph of FIG. 16, the measurement value graph may represent the resistance profile of the first-type temperature measurement element P according to temperature. In addition, the calculation formula graph may represent the resistance value according to temperature according to the resistance calculation formula of Equation 1 below.

<Equation 1>

$$R = R_0 e^{\beta\left(\frac{1}{(\alpha T + 273)} - \frac{1}{T_0 + 273}\right)} + R_{-30}$$

$R$ : Resistance in ambient temperature T (°C) (°C: Celsius temperature)
$R_0$ : Resistance in ambient temperature $T_0$ (°C)
a : TCR (Temperature Coefficient of Resistivity)
$\beta$ : B-constant of Thermistor

Here, $\alpha$ denotes a value that causes a coefficient of determination $R^2$ to be close to 1 with respect to the graph of FIG. 16 of 60 °C, which is the maximum operating temperature of the battery, or less, and may be calculated based on the graph of FIG. 16. $\beta$ may be a value previously provided by a manufacturer.

According to the disclosure, it is possible to derive a constant necessary for a resistance calculation equation by using measurement values using a resistance characteristic change graph of PTC according to the temperature, and detect abnormal heat generation of a battery cell by using the resistance calculation equation. Accordingly, prediction accuracy at a normal operating temperature may be increased at the expense of prediction accuracy at an abnormal heating temperature.

The BMS according to an embodiment may determine whether a battery cell is overheated, by using the temperature resistance table in Table 1 below, which is calculated by applying the combined resistance of the first-type temperature measurement element P to the temperature calculation formula of Equation 2 below, which is derived from an inverse function of the resistance calculation formula.

<Equation 2>

$$T = \frac{1}{\alpha}\left(\frac{1}{\frac{1}{\beta}\ln\left(\frac{R-R_{-30}}{R_0}\right)+\frac{1}{T_0+273}} - 273\right)$$

<Table 1>

| Standard temperature (°C) | Individual PTC resistance value (kΩ) | Combined PTC resistance value (kΩ) | Abnormal temperature | | | |
|---|---|---|---|---|---|---|
| | | | 60 °C | 70 °C | 80 °C | 90 °C |
| -30 | 1.873 | 13.114 | 38% | 63 % | 107 % | 167 % |
| -20 | 1.924 | 13.471 | 37 % | 61 % | 104 % | 162 % |
| -10 | 2.016 | 14.115 | 34 % | 57 % | 98 % | 154 % |
| 0 | 2.155 | 15.083 | 31 % | 53 % | 91 % | 143 % |
| 10 | 2.345 | 16.413 | 27 % | 47 % | 82 % | 131 % |
| 20 | 2.612 | 18.281 | 23 % | 41 % | 73 % | 116 % |
| 25 | 2.792 | 19.546 | 21% | 37 % | 67 % | 107 % |
| 30 | 3.037 | 21.259 | 18 % | 33 % | 60 % | 98 % |
| 40 | 3.914 | 27.396 | 11% | 23 % | 44 % | 73 % |
| 50 | 5.026 | 35.185 | 5 % | 14 % | 31 % | 53 % |

For example, Table 1 shows an individual PTC resistance value and a combined resistance value of 7 PTCs according to the standard temperature. In addition, a temperature resistance table showing the resistance change rate according to an abnormal temperature for the individual PTC resistance and the combined resistance of 7 PTCs is shown.

Referring to FIG. 17 and Table 1, in operations S110 and S120, the BMS according to an embodiment may determine whether the combined PTC resistance value has increased. Here, in operation S130, the BMS may determine whether a battery cell is overheated, by comparing the combined resistance value according to the standard temperature in Table 1 with a combined resistance value obtained by using the resistance calculation formula of Equation 1 or the temperature calculation formula of Equation 2. Here, based on determining that the battery cell is overheated, the BMS may operate a protection circuit in operation S150. If the battery cell is determined to be not overheated, normal operation can continue (S140).

For example, as shown in Table 1, when one of 7 battery cells having a standard temperature of 40 °C abnormally heats up to 60 °C, the resistance value may be measured as 30.33 kohm, which is 11 % higher than the reference value of 27.396 kohm.

According to the disclosure, abnormal heat generation of a battery cell may be determined based on a resistance change in the combined PTC resistance value. That is, by recognizing an anomaly in a cell stack including a plurality of cells, rather than measuring all temperature anomalies of individual cells, it is possible to reduce the number of sensing circuits and use a low-cost detection circuit to accurately detect a cell anomaly.

According to the disclosure, it is possible to improve the difficulty of measuring the temperatures of all cells, and determine an abnormal sign of cells before ignition by checking in advance whether abnormal heat is generated. By combining a PTC array with an NTC, abnormal heat generation may be detected when the temperature rises above a particular (trigger) temperature.

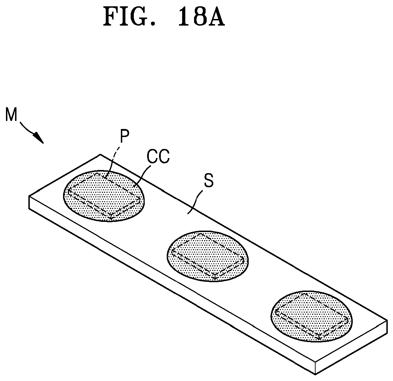

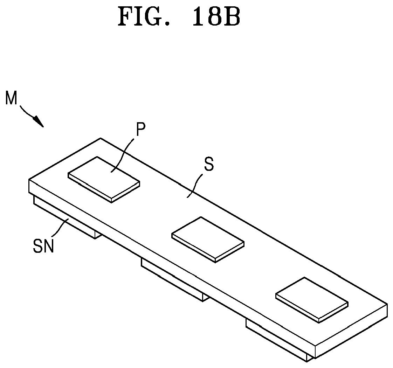

FIGS. 18A and 18B are diagrams illustrating a schematic configuration for rigidity reinforcement, according to an embodiment.

Referring to FIGS. 18A and 18B, the first-type temperature measurement element P according to an embodiment may be conformally coated by using silicone or epoxy. In addition, in the first-type temperature measurement element P according to an embodiment, a stiffener SN may be attached to one side of a common base substrate S or an individual base substrate.

For example, referring to FIGS. 18A and 18B, the measurement circuit unit M may be formed on the common base substrate S or an individual base substrate and include the first-type temperature measurement element P. For example, referring to FIG. 18A, the first-type temperature measurement element P may be conformally coated (CC) by using silicone or epoxy. For example, referring to FIG. 18B, in the first-type temperature measurement element P, a stiffener SN may be attached to a lower end portion of a common base substrate or an individual base substrate. For example, the stiffener SN may be configured by using a known reinforcing material.

According to the disclosure, the structural rigidity of a PTC may be supplemented by attaching a conformal coating (e.g., silicone or epoxy) on the upper end of the PTC, or a stiffener on the lower end of the PTC.

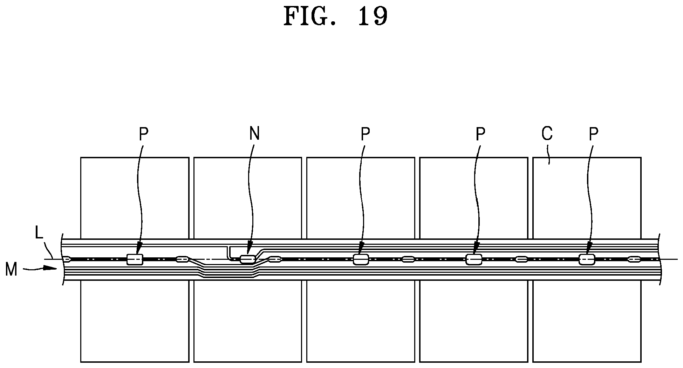

FIG. 19 is a diagram illustrating a schematic configuration of a first-type temperature measurement element and a second-type temperature measurement element, according to an embodiment.

Referring to FIG. 19, the first-type temperature measurement element P and the second-type temperature measurement element N provided in the measurement circuit unit M according to an embodiment may be arranged on the same line L. For example, referring to FIG. 19, the first-type temperature measurement element P and the second-type temperature measurement element N may be arranged on the same line and thus configured to be easily manufactured with structural rigidity improvement such as conformal coating. For example, it is possible to implement a structure in which a portion other than the first-type temperature measurement element P is filled with the second-type temperature measurement element N. In addition, when the first-type temperature measurement element P and the second-type temperature measurement element N are on the same base board, they are used independently, but a GND is used in common, and thus, the number of AFE integrated circuit (IC) channels may be minimized.

According to the disclosure, to overcome difficulties such as handling issues in mass production, a method for rigidity reinforcement was devised, and a method for facilitating production through the arrangement of PTC and NTC considering of mass production was devised.

According to the disclosure, by detecting an abnormal sign (e.g., a temperature) before battery pack ignition, it is possible to secure time for technical preparation or evacuation of users (e.g., vehicle occupants) in advance. A method of attaching an NTC to all cells has a limit on the number of AFE IC chips, but it is possible to overcome the limit through serial connection using a characteristic triggered at a PTC operation temperature. Here, for a printing type, a method for rigidity reinforcement was devised considering the vulnerable part in handling. In addition, a method for facilitating production through the arrangement of PTC and NTC considering mass productivity was devised.

Although the embodiments have been described with the limited embodiments and the drawings, various modifications and changes may be made by those of skill in the art from the above description. For example, the described techniques may be performed in a different order from the described method, and/or components of the described system, structure, device, circuit, etc. may be combined or integrated in a different form from the described method, or may be replaced or substituted by other components or equivalents to achieve appropriate results.

Therefore, other implementations or embodiments, and equivalents of the following claims are within the scope of the claims.

According to the disclosure, provided are a battery pack using first- and second-type temperature measurement elements having different resistance characteristics according to temperature change and thus capable of preventing erroneous determination of overheating, and determining overheating accurately, and a method of controlling the battery pack. However, the scope of the disclosure is not limited by the above effect.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

**Claims**

1. A battery pack, comprising:

   a plurality of battery cells (C);
   a first measurement circuit unit (M1) and a second measurement circuit unit (M2) each configured to measure temperature information of the plurality of battery cells (C) and respectively comprising a first-type temperature measurement element (P) and a second-type temperature measurement element (N) different from each other and having different characteristics of a resistance change according to a temperature change, wherein the first measurement circuit unit (M1) and the second measurement circuit unit (M2) are formed on a common base substrate (S) or on different individual base substrates (S3, S4); and
   a battery management system (BMS) configured to determine whether one or more of the plurality of battery cells (C) are overheated based on the temperature information of the plurality of battery cells (C);
   **characterized in that**

   (i) the battery management system (BMS) is further configured to calculate a resistance prediction value by applying a temperature value of the second-type temperature measurement element (N) that is measured based on a measurement value of the second measurement circuit unit (M2) to a resistance calculation formula derived based on a resistance profile according to a temperature of the first-type temperature measurement element (P), calculate a resistance measurement value based on a first voltage measurement value for a combined resistance of the first-type temperature measurement element (P) that is measured by the first measurement circuit unit (M1), and determine whether one or more of the plurality of battery cells (C) are overheated based on the resistance prediction value and the resistance measurement value; and/or
   (ii) the battery management system (BMS) is further configured to determine whether one or more of the plurality of battery cells (C) are overheated by using a temperature resistance table calculated by applying a value of the combined resistance of the first-type temperature measurement element (P) to a temperature calculation formula derived from an inverse function of the resistance calculation formula.

2. The battery pack as claimed in claim 1,

   wherein the first-type temperature measurement element (P) includes a conformal coating comprising silicone or epoxy, or a stiffener is attached to one side of the common base substrate (S) or the individual base substrate (S3, S4); and/or
   wherein the first-type temperature measurement element (P) and the second-type temperature measurement element (N) are arranged on a same line (L).

3. The battery pack as claimed in claim 1 or 2, wherein a plurality of first-type temperature measurement elements (P) are arranged in series to be respectively allocated to the plurality of battery cells (C) in a direction in which the plurality of battery cells (C) are arranged, and
   a plurality of second-type temperature measurement elements (N) are arranged in the direction in which the plurality of battery cells (C) are arranged, wherein the number of the second-type temperature measurement elements (N) is less than the number of the first-type temperature measurement elements (P).

4. The battery pack as claimed in claim 3, wherein the common base substrate (S) or the individual base substrates (S3, S4) comprise a flexible insulating film (S1) or a rigid insulating substrate (S2), and
   the plurality of first-type temperature measurement elements (P) or the plurality of the second-type temperature measurement elements (N) are patterned on or mounted as chips on the common base substrate (S) or the individual base substrates (S3, S4).

5. The battery pack as claimed in claim 3 or 4, wherein the first-type temperature measurement element (P) has a positive characteristic of the resistance change according to the temperature change and exhibits a nonlinear change in a profile of the resistance change according to the temperature change, and

the second-type temperature measurement element (N) has a negative characteristic of the resistance change according to the temperature change and exhibits a linear change in a profile of the resistance change according to the temperature change.

6. The battery pack as claimed in any one of claims 3 to 5, wherein the battery management system (BMS) is further configured to determine whether one or more of the plurality of battery cells (C) are overheated based on a first voltage measurement value of a combined resistance of the first-type temperature measurement element (P) that is measured by the first measurement circuit unit (M1).

7. A method of controlling a battery pack including a plurality of battery cells (C), the method comprising the steps of:

measuring, by a first measurement circuit unit (M1) and a second measurement circuit unit (M2), temperature information of the plurality of battery cells (C), wherein the first measurement unit (M1) and the second measurement unit (M2) respectively comprise a first-type temperature measurement element (P) and a second-type temperature measurement element (N) different from each other and having different characteristics of a resistance change according to a temperature change, wherein the first measurement circuit unit (M1) and the second measurement circuit unit (M2) are formed on a common base substrate (S) or on different individual base substrates (S3, S4); and

determining, by a battery management system (BMS), whether one or more of the plurality of battery cells (C) are overheated based on the temperature information,

wherein the battery management system (BMS) determines whether the one or more of the plurality of battery cells (C) are overheated based on a first measurement value (V1) based on an output of the first measurement circuit unit (M1) and a second measurement value (V2) based on an output of the second measurement circuit unit (M2);

**characterized in that**

(i) the method further comprising the steps of:

calculating, by the battery management system (BMS), a resistance prediction value by applying a temperature value of the second-type temperature measurement element (N) measured based on a measurement value of the second measurement circuit unit (M2) to a resistance calculation formula derived based on a resistance profile according to a temperature of the first-type temperature measurement element (P); and

calculating, by the battery management system (BMS), a resistance measurement value based on a first voltage measurement value for a combined resistance of the first-type temperature measurement element (P) that is measured by the first measurement circuit unit (M1),

wherein the determining is based on the resistance prediction value and the resistance measurement value; and/or

(ii) the determining further comprises using a temperature resistance table calculated by applying a value of the combined resistance of the first-type temperature measurement element (P) to a temperature calculation formula derived from an inverse function of the resistance calculation formula.

8. The method as claimed in claim 7, wherein the first-type temperature measurement element (P) has a positive characteristic of the resistance change according to the temperature change and exhibits a nonlinear change at an inflection point in a profile of the resistance change according to the temperature change, and

the second-type temperature measurement element (N) has a negative characteristic of the resistance change according to the temperature change and exhibits a linear change in a profile of the resistance change according to the temperature change.

9. The method as claimed in claim 7 or 8, wherein the determining further comprises determining whether the first measurement value (V1) is greater than or equal to a trigger point corresponding to the inflection point (CP) of the first-type temperature measurement element (P), and wherein the determining is based on the first measurement value (V1) being greater than or equal to the trigger point and the second measurement value (V2) being greater than or equal to a threshold value.

10. The method as claimed in any one of claims 7 to 9, wherein the determining is based on a first voltage measurement value of a combined resistance of the first-type temperature measurement element (P) measured by the first measurement circuit unit (M1).

11. A machine-readable medium storing executable instructions that, on execution by a computing device, facilitate performance of the method as claimed in any one of claims 7 to 10.

**Patentansprüche**

1. Batteriepack, umfassend:

mehrere Batteriezellen (C);
eine erste Messschaltungseinheit (MI) und eine zweite Messschaltungseinheit (M2), die jeweils zum Messen von Temperaturinformationen der mehreren Batteriezellen (C) konfiguriert sind und jeweils ein Temperaturmesselement vom ersten Typ (P) und ein Temperaturmesselement vom zweiten Typ (N) umfassen, die sich voneinander unterscheiden und unterschiedliche Eigenschaften einer Widerstandsänderung gemäß einer Temperaturänderung aufweisen, wobei die erste Messschaltungseinheit (MI) und die zweite Messschaltungseinheit (M2) auf einem gemeinsamen Basissubstrat (S) oder auf unterschiedlichen einzelnen Basissubstraten (S3, S4) ausgebildet sind; und
ein Batteriemanagementsystem (BMS), das dazu konfiguriert ist, anhand der Temperaturinformationen der mehreren Batteriezellen (C) festzustellen, ob eine oder mehrere der mehreren Batteriezellen (C) überhitzt sind;
**dadurch gekennzeichnet, dass**

(i) das Batteriemanagementsystem (BMS) weiterhin so konfiguriert ist, dass es einen Widerstandsvorhersagewert berechnet, indem es einen auf der Grundlage eines Messwerts der zweiten Messschaltungseinheit (M2) gemessenen Temperaturwert des Temperaturmesselements vom zweiten Typ (N) auf eine auf der Grundlage eines Widerstandsprofils gemäß einer Temperatur des Temperaturmesselements vom ersten Typ (P) abgeleitete Widerstandsberechnungsformel anwendet, einen Widerstandsmesswert auf der Grundlage eines ersten Spannungsmesswerts für einen kombinierten Widerstand des Temperaturmesselements vom ersten Typ (P) berechnet, der von der ersten Messschaltungseinheit (MI) gemessen wird, und auf der Grundlage des Widerstandsvorhersagewerts und des Widerstandsmesswerts feststellt, ob eine oder mehrere der mehreren Batteriezellen (C) überhitzt sind; und/oder
(ii) das Batteriemanagementsystem (BMS) weiterhin dazu konfiguriert ist, festzustellen, ob eine oder mehrere der mehreren Batteriezellen (C) überhitzt sind, indem es eine Temperaturwiderstandstabelle verwendet, die durch Anwenden eines Werts des kombinierten Widerstands des Temperaturmesselements vom ersten Typ (P) auf eine Temperaturberechnungsformel berechnet wird, die aus einer Umkehrfunktion der Widerstandsberechnungsformel abgeleitet wird.

2. Batteriepack nach Anspruch 1,

wobei das Temperaturmesselement vom ersten Typ (P) eine konforme Beschichtung umfasst, die Silikon oder Epoxidharz umfasst, oder eine Versteifung an einer Seite des gemeinsamen Basissubstrats (S) oder des einzelnen Basissubstrats (S3, S4) angebracht ist; und/oder
wobei das Temperaturmesselement vom ersten Typ (P) und das Temperaturmesselement vom zweiten Typ (N) auf einer gleichen Linie (L) angeordnet sind.

3. Batteriepack nach Anspruch 1 oder 2, wobei mehrere Temperaturmesselemente vom ersten Typ (P) in Reihe angeordnet sind, um jeweils den mehreren Batteriezellen (C) in einer Richtung zugeordnet zu sein, in der die mehreren Batteriezellen (C) angeordnet sind, und
mehrere Temperaturmesselemente vom zweiten Typ (N) in der Richtung angeordnet sind, in der die mehreren Batteriezellen (C) angeordnet sind, wobei die Anzahl der Temperaturmesselemente vom zweiten Typ (N) geringer ist als die Anzahl der Temperaturmesselemente vom ersten Typ (P).

4. Batteriepack nach Anspruch 3, wobei das gemeinsame Basissubstrat (S) oder die einzelnen Basissubstrate (S3, S4) einen flexiblen Isolierfilm (S1) oder ein starres Isoliersubstrat (S2) umfasst bzw. umfassen und
die mehreren Temperaturmesselementen vom ersten Typ (P) oder die mehreren Temperaturmesselemente vom zweiten Typ (N) auf dem gemeinsamen Basissubstrat (S) oder den einzelnen Basissubstraten (S3, S4) strukturiert oder als Chips darauf montiert sind.

**5.** Batteriepack nach Anspruch 3 oder 4, wobei das Temperaturmesselement vom ersten Typ (P) eine positive Eigenschaft der Widerstandsänderung gemäß der Temperaturänderung aufweist und eine nichtlineare Änderung in einem Profil der Widerstandsänderung gemäß der Temperaturänderung zeigt, und
das Temperaturmesselement vom zweiten Typ (N) eine negative Eigenschaft der Widerstandsänderung gemäß der Temperaturänderung aufweist und eine lineare Änderung in einem Profil der Widerstandsänderung gemäß der Temperaturänderung zeigt.

**6.** Batteriepack nach einem der Ansprüche 3 bis 5, wobei das Batteriemanagementsystem (BMS) außerdem dazu konfiguriert ist, basierend auf einem ersten Spannungsmesswert eines kombinierten Widerstands des Temperaturmesselements vom ersten Typ (P), der von der ersten Messschaltungseinheit (M1) gemessen wird, festzustellen, ob eine oder mehrere der mehreren Batteriezellen (C) überhitzt sind.

**7.** Verfahren zum Steuern eines Batteriepackes, der mehrere Batteriezellen (C) umfasst, wobei das Verfahren die folgenden Schritte umfasst:

Messen von Temperaturinformationen der mehreren Batteriezellen (C) durch eine erste Messschaltungseinheit (MI) und eine zweite Messschaltungseinheit (M2), wobei die erste Messschaltungseinheit (MI) und die zweite Messeinheit (M2) jeweils ein Temperaturmesselement vom ersten Typ (P) und ein Temperaturmesselement vom zweiten Typ (N) umfassen, die sich voneinander unterscheiden und unterschiedliche Eigenschaften einer Widerstandsänderung gemäß einer Temperaturänderung aufweisen, wobei die erste Messschaltungseinheit (M1) und die zweite Messschaltungseinheit (M2) auf einem gemeinsamen Basissubstrat (S) oder auf unterschiedlichen einzelnen Basissubstraten (S3, S4) ausgebildet sind; und
Feststellen durch ein Batteriemanagementsystem (BMS) auf der Grundlage der Temperaturinformationen, ob eine oder mehrere der mehreren Batteriezellen (C) überhitzt sind,
wobei das Batteriemanagementsystem (BMS) auf Grundlage eines ersten Messwerts (V1), der auf einer Ausgabe der ersten Messschaltungseinheit (M1) basiert, und eines zweiten Messwerts (V2), der auf einer Ausgabe der zweiten Messschaltungseinheit (M2) basiert, feststellt, ob die eine oder die mehreren der mehreren Batteriezellen (C) überhitzt sind;
**dadurch gekennzeichnet, dass**

(i) das Verfahren weiterhin die folgenden Schritte umfasst:

Berechnen eines Widerstandsvorhersagewerts durch das Batteriemanagementsystem (BMS) durch Anwenden eines auf der Grundlage eines Messwerts der zweiten Messschaltungseinheit (M2) gemessenen Temperaturwerts des Temperaturmesselements vom zweiten Typ (N) auf eine auf der Grundlage eines Widerstandsprofils gemäß einer Temperatur des Temperaturmesselements vom ersten Typ (P) abgeleitete Widerstandsberechnungsformel; und
Berechnen eines Widerstandsmesswerts durch das Batteriemanagementsystem (BMS) basierend auf einem ersten Spannungsmesswert für einen kombinierten Widerstand des Temperaturmesselements vom ersten Typ (P), der von der ersten Messschaltungseinheit (M1) gemessen wird,
wobei das Feststellen auf dem Widerstandsvorhersagewert und dem Widerstandsmesswert basiert; und/oder

(ii) das Feststellen weiterhin das Verwenden einer Temperaturwiderstandtabelle umfasst, die durch Anwenden eines Werts des kombinierten Widerstands des Temperaturmesselements vom ersten Typ (P) auf eine aus einer Umkehrfunktion der Widerstandsberechnungsformel abgeleitete Temperaturberechnungsformel berechnet wird.

**8.** Verfahren nach Anspruch 7, wobei das Temperaturmesselement vom ersten Typ (P) eine positive Eigenschaft der Widerstandsänderung gemäß der Temperaturänderung aufweist und an einem Wendepunkt in einem Profil der Widerstandsänderung gemäß der Temperaturänderung eine nichtlineare Änderung zeigt, und
das Temperaturmesselement vom zweiten Typ (N) eine negative Eigenschaft der Widerstandsänderung gemäß der Temperaturänderung aufweist und eine lineare Änderung in einem Profil der Widerstandsänderung gemäß der Temperaturänderung zeigt.

**9.** Verfahren nach Anspruch 7 oder 8, wobei das Feststellen weiterhin das Feststellen umfasst, ob der erste Messwert (V1) größer oder gleich einem Auslösepunkt ist, der dem Wendepunkt (CP) des Temperaturmesselements vom ersten Typ (P) entspricht, und wobei das Feststellen darauf basiert, dass der erste Messwert (V1) größer oder gleich dem Auslösepunkt und der zweite Messwert (V2) größer oder gleich einem Schwellenwert ist.

10. Verfahren nach einem der Ansprüche 7 bis 9, wobei das Feststellen auf einem ersten Spannungsmesswert eines von der ersten Messschaltungseinheit (M1) gemessenen kombinierten Widerstands des Temperaturmesselements vom ersten Typ (P) basiert.

11. Maschinenlesbares Medium, auf dem ausführbare Anweisungen gespeichert sind, die bei Ausführung durch ein Computergerät die Durchführung des Verfahrens nach einem der Ansprüche 7 bis 10 unterstützen.


**Revendications**

1. Bloc-batterie, comportant :

    une pluralité de cellules de batterie (C) ;
    une première unité de circuit de mesure (M1) et une deuxième unité de circuit de mesure (M2) configurées chacune pour mesurer des informations de température de la pluralité de cellules de batterie (C) et comportant respectivement un élément de mesure de température de premier type (P) et un élément de mesure de température de deuxième type (N) différents l'un de l'autre et présentant des caractéristiques différentes d'un changement de résistance selon un changement de température, dans lequel la première unité de circuit de mesure (M1) et la deuxième unité de circuit de mesure (M2) sont formées sur un substrat de base commun (S) ou sur des substrats de base individuels (S3, S4) différents ; et
    un système de gestion de batterie (BMS) configuré pour déterminer si une ou plusieurs parmi la pluralité de cellules de batterie (C) sont en surchauffe sur la base des informations de température de la pluralité de cellules de batterie (C) ;
    **caractérisé en ce que**

    (i) le système de gestion de batterie (BMS) est en outre configuré pour calculer une valeur de prédiction de résistance en appliquant une valeur de température de l'élément de mesure de température de deuxième type (N) qui est mesurée sur la base d'une valeur de mesure de la deuxième unité de circuit de mesure (M2) à une formule de calcul de résistance dérivée sur la base d'un profil de résistance selon une température de l'élément de mesure de température de premier type (P), calculer une valeur de mesure de résistance sur la base d'une première valeur de mesure de tension pour une résistance combinée de l'élément de mesure de température de premier type (P) qui est mesurée par la première unité de circuit de mesure (M1), et déterminer si une ou plusieurs parmi la pluralité de cellules de batterie (C) sont en surchauffe sur la base de la valeur de prédiction de résistance et de la valeur de mesure de résistance ; et/ou
    (ii) le système de gestion de batterie (BMS) est en outre configuré pour déterminer si une ou plusieurs parmi la pluralité de cellules de batterie (C) sont en surchauffe en utilisant une table de résistance à la température calculée en appliquant une valeur de la résistance combinée de l'élément de mesure de température de premier type (P) à une formule de calcul de température dérivée d'une fonction inverse de la formule de calcul de résistance.

2. Bloc-batterie selon la revendication 1,

    dans lequel l'élément de mesure de température de premier type (P) inclut un revêtement conforme comportant de la silicone ou de l'époxy, ou un raidisseur est fixé à un côté du substrat de base commun (S) ou du substrat de base individuel (S3, S4) ; et/ou
    dans lequel l'élément de mesure de température de premier type (P) et l'élément de mesure de température de deuxième type (N) sont agencés sur une même ligne (L).

3. Bloc-batterie selon la revendication 1 ou 2, dans lequel une pluralité d'éléments de mesure de température de premier type (P) sont agencés en série pour être respectivement attribués à la pluralité de cellules de batterie (C) dans une direction dans laquelle la pluralité de cellules de batterie (C) sont agencées, et
une pluralité d'éléments de mesure de température de deuxième type (N) sont agencés dans la direction dans laquelle la pluralité de cellules de batterie (C) sont agencées, dans lequel le nombre d'éléments de mesure de température de deuxième type (N) est inférieur au nombre d'éléments de mesure de température de premier type (P).

4. Bloc-batterie selon la revendication 3, dans lequel le substrat de base commun (S) ou les substrats de base individuels (S3, S4) comportent un film isolant souple (S1) ou un substrat isolant rigide (S2), et la pluralité d'éléments de mesure de température de premier type (P) ou la pluralité des éléments de mesure de température de deuxième type (N) sont imprimés sur le substrat de base commun (S) ou les substrats de base individuels (S3, S4) ou montés sous forme de puces sur ceux-ci.

5. Bloc-batterie selon la revendication 3 ou 4, dans lequel l'élément de mesure de température de premier type (P) présente une caractéristique positive du changement de résistance selon le changement de température et présente un changement non linéaire dans un profil du changement de résistance selon le changement de température, et l'élément de mesure de température de deuxième type (N) présente une caractéristique négative du changement de résistance selon le changement de température et présente un changement linéaire dans un profil du changement de résistance selon le changement de température.

6. Bloc-batterie selon l'une quelconque des revendications 3 à 5, dans lequel le système de gestion de batterie (BMS) est en outre configuré pour déterminer si une ou plusieurs parmi la pluralité de cellules de batterie (C) sont en surchauffe sur la base d'une première valeur de mesure de tension d'une résistance combinée de l'élément de mesure de température de premier type (P) qui est mesurée par la première unité de circuit de mesure (M1).

7. Procédé de commande d'un bloc-batterie incluant une pluralité de cellules de batterie (C), le procédé comportant les étapes suivantes :

la mesure, au moyen d'une première unité de circuit de mesure (M1) et d'une deuxième unité de circuit de mesure (M2), d'informations de température de la pluralité de cellules de batterie (C), dans lequel la première unité de mesure (M1) et la deuxième unité de mesure (M2) comportent respectivement un élément de mesure de température de premier type (P) et un élément de mesure de température de deuxième type (N) différents l'un de l'autre et présentant des caractéristiques différentes d'un changement de résistance selon un changement de température, dans lequel la première unité de circuit de mesure (M1) et la deuxième unité de circuit de mesure (M2) sont formées sur un substrat de base commun (S) ou sur des substrats de base individuels (S3, S4) différents ; et

le fait de déterminer, au moyen d'un système de gestion de batterie (BMS), si une ou plusieurs parmi la pluralité de cellules de batterie (C) sont en surchauffe sur la base des informations de température, dans lequel le système de gestion de batterie (BMS) détermine si les une ou plusieurs parmi la pluralité de cellules de batterie (C) sont en surchauffe sur la base d'une première valeur de mesure (V1) basée sur une sortie de la première unité de circuit de mesure (M1) et d'une deuxième valeur de mesure (V2) basée sur une sortie de la deuxième unité de circuit de mesure (M2) ;
**caractérisé en ce que**

(i) le procédé comporte en outre les étapes suivantes :

le calcul, au moyen du système de gestion de batterie (BMS), d'une valeur de prédiction de résistance par application d'une valeur de température de l'élément de mesure de température de deuxième type (N) mesurée sur la base d'une valeur de mesure de la deuxième unité de circuit de mesure (M2) à une formule de calcul de résistance dérivée sur la base d'un profil de résistance selon une température de l'élément de mesure de température de premier type (P) ; et
le calcul, au moyen du système de gestion de batterie (BMS), d'une valeur de mesure de résistance sur la base d'une première valeur de mesure de tension pour une résistance combinée de l'élément de mesure de température de premier type (P) qui est mesurée par la première unité de circuit de mesure (M1),
dans lequel la détermination est basée sur la valeur de prédiction de résistance et la valeur de mesure de résistance ; et/ou

(ii) la détermination comporte en outre l'utilisation d'une table de résistance à la température calculée en appliquant une valeur de la résistance combinée de l'élément de mesure de température de premier type (P) à une formule de calcul de température dérivée d'une fonction inverse de la formule de calcul de résistance.

8. Procédé selon la revendication 7, dans lequel l'élément de mesure de température de premier type (P) présente une caractéristique positive du changement de résistance selon le changement de température et présente un changement non linéaire à un point d'inflexion dans un profil du changement de résistance selon le changement de température, et

l'élément de mesure de température de deuxième type (N) présente une caractéristique négative du changement de résistance selon le changement de température et présente un changement linéaire dans un profil du changement de résistance selon le changement de température.

9. Procédé selon la revendication 7 ou 8, dans lequel la détermination comporte en outre le fait de déterminer si la première valeur de mesure (V1) est supérieure ou égale à un point de déclenchement correspondant au point d'inflexion (CP) de l'élément de mesure de température de premier type (P), et dans lequel la détermination est basée sur le fait que la première valeur de mesure (V1) est supérieure ou égale au point de déclenchement et que la deuxième valeur de mesure (V2) est supérieure ou égale à une valeur seuil.

10. Procédé selon l'une quelconque des revendications 7 à 9, dans lequel la détermination est basée sur une première valeur de mesure de tension d'une résistance combinée de l'élément de mesure de température de premier type (P) mesurée par la première unité de circuit de mesure (M1).

11. Support lisible par machine stockant des instructions exécutables qui, lors de leur exécution par un dispositif informatique, facilitent la réalisation du procédé selon l'une quelconque des revendications 7 à 10.

# FIG. 1

# FIG. 2

# FIG. 3

# FIG. 4

FIG. 5

FIG. 6

FIG. 7

FIG. 8A

FIG. 8B

FIG. 8C

FIG. 8D

## FIG. 9

# FIG. 10

FIG. 11

# FIG. 12

START

OBTAIN FIRST MEASUREMENT VALUE V1 FROM OUTPUT FROM FIRST MEASUREMENT CIRCUIT

OBTAIN SECOND MEASUREMENT VALUE V2 FROM OUTPUT FROM SECOND MEASUREMENT CIRCUIT

CALCULATE FIRST AND SECOND CONVERSION MEASUREMENT VALUES FROM FIRST AND SECOND MEASUREMENT VALUES V1 AND V2

CALCULATE DIFFERENCE VALUE BETWEEN FIRST SECOND CONVERSION MEASUREMENT VALUES, OR DIFFERENCE VALUE (V1−V2) BETWEEN FIRST AND SECOND MEASUREMENT VALUES

IS DIFFERENCE VALUE BETWEEN FIRST AND SECOND CONVERSION MEASUREMENT VALUES GREATER THAN OR EQUAL TO THRESHOLD VALUE? OR IS DIFFERENCE VALUE (V1−V2) BETWEEN FIRST AND SECOND MEASUREMENT VALUES GREATER THAN OR EQUAL TO THRESHOLD VALUE?

NO

YES

START PROTECTION OPERATION

END

EP 4 447 191 B1

# FIG. 13

# FIG. 14

V=5V

R = 20kΩ

V_out

PTC assy

# FIG. 15

V_out

Temperature (°C)

FIG. 16

# FIG. 17

START

PCT RESISTANCE IS INCREASED ─S110

S120

HAS PARALLEL PTC RESISTANCE INCREASED?

NO

YES

S130

IS IT ABNORMAL HEAT GENERATION? (COMPARISON WITH NTC)

NO

S140

NORMAL

YES

OPERATE PROTECTION CIRCUIT ─S150

END

FIG. 18A

FIG. 18B

FIG. 19

**EP 4 447 191 B1**

**Patent documents cited in the description**

- KR 20230021501 A
- US 2011210703 A1
- EP 3525279 A1